(19) Europäisches Patentamt / European Patent Office / Office européen des brevets

(11) **EP 3 167 631 B1**

(12) # FASCICULE DE BREVET EUROPEEN

(45) Date de publication et mention de la délivrance du brevet:
**18.12.2019 Bulletin 2019/51**

(21) Numéro de dépôt: **15759836.8**

(22) Date de dépôt: **29.06.2015**

(51) Int Cl.:
*H04W 4/38* (2018.01)         *H04W 40/32* (2009.01)
*H04W 84/20* (2009.01)       *H04L 12/24* (2006.01)
*H04W 40/24* (2009.01)       *H04L 29/08* (2006.01)

(86) Numéro de dépôt international:
**PCT/FR2015/051776**

(87) Numéro de publication internationale:
**WO 2016/005675 (14.01.2016 Gazette 2016/02)**

(54) **PROCÉDÉ D'ADHÉSION À UNE GRAPPE DE DISPOSITIFS ÉLECTRONIQUES COMMUNIQUANT VIA UN RÉSEAU SANS FIL, DISPOSITIF ÉLECTRONIQUE METTANT EN OEUVRE LEDIT PROCÉDÉ, ET SYSTÈME ASSOCIÉS**

VERFAHREN ZUR VERBINDUNG EINER ÜBER EIN DRAHTLOSES NETZWERK KOMMUNIZIERENDEN GRUPPE VON ELEKTRONISCHEN VORRICHTUNGEN, ZUGEHÖRIGE ELEKTRONISCHE VORRICHTUNG ZUR IMPLEMENTIERUNG DES BESAGTEN VERFAHRENS UND SYSTEM

METHOD FOR JOINING A CLUSTER OF ELECTRONIC DEVICES COMMUNICATING VIA A WIRELESS NETWORK, ASSOCIATED ELECTRONIC DEVICE IMPLEMENTING SAID METHOD AND SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **10.07.2014 FR 1456660**

(43) Date de publication de la demande:
**17.05.2017 Bulletin 2017/20**

(73) Titulaires:
• **Traxens**
**13013 Marseille (FR)**
• **Institut National de Recherche en Informatique et en Automatique**
**78150 Rocquencourt (FR)**

(72) Inventeurs:
• **DARAGON, Pascal**
**13850 Greasque (FR)**
• **GUZZO, Natale**
**13001 Marseille (FR)**
• **MITTON, Nathalie**
**59650 Villeneuve d'Ascq (FR)**
• **NANDAGOBAN, Arulnambi**
**13008 Marseille (FR)**

(74) Mandataire: **Brun, Philippe Alexandre Georges**
**MED'iNVENT CONSULTING**
**Espace Mistral - Bât.A**
**297 avenue du Mistral**
**ZI ATHELIA IV**
**13705 La Ciotat Cedex (FR)**

(56) Documents cités:
• **HAIDAR SAFA ET AL: "A cluster-based trust-aware routing protocol for mobile ad hoc networks", WIRELESS NETWORKS ; THE JOURNAL OF MOBILE COMMUNICATION, COMPUTATION AND INFORMATION, KLUWER ACADEMIC PUBLISHERS, DO, vol. 16, no. 4, 20 mai 2009 (2009-05-20), pages 969-984, XP019832836, ISSN: 1572-8196**
• **TONY DUCROCQ ET AL: "Energy-based clustering for wireless sensor network lifetime optimization", 2013 IEEE WIRELESS COMMUNICATIONS AND NETWORKING CONFERENCE (WCNC), 1 avril 2013 (2013-04-01), pages 968-973, XP055177480, DOI: 10.1109/WCNC.2013.6554695 ISBN: 978-1-46-735937-5**

- **WENDI B HEINZELMAN ET AL: "An Application-Specific Protocol Architecture for Wireless Microsensor Networks", IEEE TRANSACTIONS ON WIRELESS COMMUNICATIONS, IEEE SERVICE CENTER, PISCATAWAY, NJ, US, vol. 1, no. 4, 1 octobre 2002 (2002-10-01) , XP011080896, ISSN: 1536-1276 cité dans la demande**

**Description**

L'invention concerne un procédé d'adhésion à une grappe de dispositifs électroniques communicants, ledit procédé étant mis en œuvre par une unité de traitement de l'un desdits dispositifs électroniques communiquant avec des pairs au travers d'un réseau de communication sans fil.

L'invention concerne en outre un système comportant une pluralité de dispositifs mettant en œuvre un tel procédé de d'adhésion.

A titre d'exemple d'application préférée mais non limitatif, l'invention sera décrite au travers d'une application en lien avec la collecte de grandeurs, telles que, par exemple, température, humidité, lumière, vibration, choc, etc., en lien avec les environnements interne et/ou externe de conteneurs (ou containers selon une terminologie anglo-saxonne) de biens ou de marchandises. Selon ledit exemple d'application, lesdits conteneurs sont agglomérés, empilés sur une aire de stockage ou itinérants sur une plateforme de transport telle qu'un navire porte-conteneurs, un train de marchandises ou toute autre plateforme de transport adaptée. Chaque conteneur coopère avec l'un desdits dispositifs communicants. Ces derniers sont chargés de collecter et d'acheminer lesdites grandeurs au travers de messages de service à destination de dispositifs pairs agissant en tant que « tête de grappe » dont une mission consiste en outre à mettre en œuvre un service déterminé. Un tel service peut, par exemple, consister à agréger des données collectées par les dispositifs communicants et à transmettre lesdites données, après leur agrégation, à une entité distante au moyen d'une liaison longue portée ou longue distance de type liaison satellite ou liaison radiotéléphonique. L'invention ne saurait toutefois être limitée à ce seul exemple d'application. Plus généralement, un dispositif agissant en tant que « tête de grappe » sera chargé de mettre en œuvre un service donné en lien avec des données collectées et acheminées par ses pairs, ledit service donné pouvant concerner une supervision ou une gestion d'alarmes, en lieu et place ou en complément d'une mise en liaison avec une entité distante.

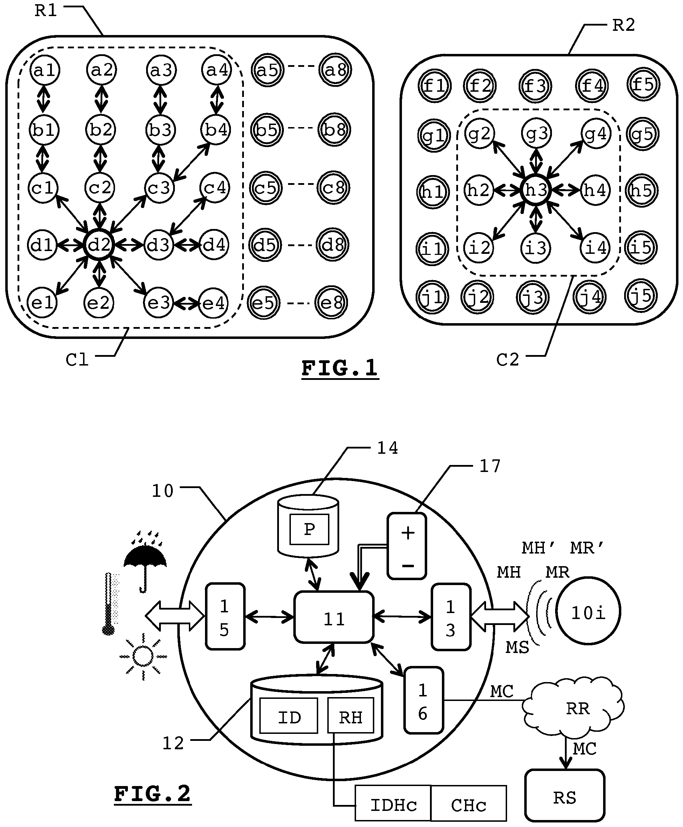

De nombreuses typologies ou configurations de réseaux d'objets communicants existent. La figure 1 présente ainsi schématiquement deux réseaux R1 et R2 de communication sans fil. Quel que soit le réseau opéré, chaque dispositif communicant, que l'on nomme également et généralement « nœud » au sein d'un tel réseau, met en œuvre un procédé de communication lui permettant d'échanger des messages de données et/ou de service avec un nœud tiers ou pair. Ainsi, le réseau R1 met en situation quarante dispositifs électroniques communicants respectivement référencés en figure 1 : a1 à a8, b1 à b8, c1 à c8, d1 à d8 et e1 à e8. De son côté, le réseau R2 met en situation vingt-cinq dispositifs électroniques communicants, respectivement référencés en figure 1 : f1 à f5, g1 à g5, h1 à h5, il à i5 et j1 à j5.

Que l'on exploite un réseau simple-saut (ou « *single-hop network* » selon une terminologie anglo-saxonne), tel que, à titre d'exemple, le réseau R2 décrit en liaison avec la figure 1, ou multi-sauts (ou « *multi-hop network* » selon une terminologie anglo-saxonne) tel que, à titre d'exemple, le réseau R1 décrit en liaison avec la figure 1, un premier nœud que nous nommerons « source », peut préparer un message de service, représenté en figure 1 par une double flèche, comportant des données en lien avec, à titre d'exemple non limitatif, une grandeur mesurée par un capteur coopérant avec ledit premier nœud, à destination d'un deuxième nœud « destinataire ».

Selon un réseau simple-saut, la communication entre les premier et deuxième nœuds est directe. En revanche, selon un réseau multi-sauts, une telle communication peut être indirecte. Ainsi, un message adressé depuis un nœud « source » peut être relayé par un ou plusieurs nœuds « tiers ou intermédiaires », dont les rôles respectifs consistent à relayer ledit message émanant du nœud « source » afin que celui-ci soit *in fine* acheminé vers et réceptionné par le nœud « destinataire ». Les nœuds constituent dans ce cas des grappes ou des clusters, selon une terminologie anglo-saxonne, telles que, à titre d'exemple, les grappes C1 et C2 représentées par un cerclage en ligne pointillée par la figure 1. Le cheminement suivant lequel un message de service émanant d'un nœud « source » à destination d'un deuxième nœud « destinataire » via un ou plusieurs nœuds « relayeurs » est nommé généralement « route ». Ainsi, selon la figure 1, un message émis depuis le nœud a4 à destination du nœud d2, sera relayé successivement par les nœuds intermédiaires b4 et c3.

La communication au sein de réseaux de communication simple-saut ou multi-sauts est généralement réalisée par voie radio. La communication est généralement de faible portée, c'est-à-dire de l'ordre de quelques mètres à quelques dizaines de mètres, de sorte que, de proche en proche, les messages de service soient transmis entre les différents nœuds. Lorsque des données sont supposées être acheminées à destination d'un serveur ou plus généralement d'une entité distante, un deuxième mode de communication est mis en œuvre, par exemple, par voie GSM (« *Global System for Mobile Communications* » selon une terminologie anglo-saxonne) ou GPRS (« *General Packet Radio Service* » selon une terminologie anglo-saxonne) voire encore, par une liaison satellite.

Les échanges entre nœuds, des traitements ou calculs mis en œuvre par ces derniers basés sur des données échangées, ainsi que l'acheminement éventuel et distant de données collectées au sein d'un réseau ou d'une grappe de dispositifs communicants, sont autant d'actions consommatrices en énergie électrique. A titre d'exemple, le document titré « A cluster-based trust aware routing protocol for mobile ad-hoc networks » (S. Haidar, H. Artail, D. Tabet - WIRELESS NETWORK, Pages 969-984, 2010), présente un procédé d'adhésion pour un réseau simple saut très énergivore car il impose que chaque nœud dudit réseau se présente à ses nœuds voisins de sorte à établir des connexions entre nœuds, en se basant sur des paramètres de confiance et impliquant l'échange en continu d'un grand nombre de messages.

Comme l'indique à titre d'exemple préféré la figure 2, un nœud consiste généralement et principalement en un dispositif électronique 10 comportant une unité de traitement 11, par exemple sous la forme d'un ou plusieurs microcontrôleurs, coopérant avec une mémoire de données 12, éventuellement une mémoire de programmes 14, lesdites mémoires étant éventuellement dissociées. L'unité de traitement 11 coopère avec lesdites mémoires 12 et 14 au moyen de bus de communication internes filaires ou par couplage. Généralement, un dispositif électronique 10 comporte un ou plusieurs capteurs de mesure 15 d'une grandeur physique en lien avec l'environnement du dispositif 10. Un tel capteur peut mesurer la température environnante, un taux d'humidité ou la présence/absence/intensité de lumière. Le dispositif 10 comporte en outre des premiers moyens de communication 13 coopérant avec l'unité de traitement 11 et assurant une communication de proximité sans fil avec tout autre dispositif électronique 10i situé à portée de communication. Il peut en outre comporter des deuxièmes moyens de communication 16 de type « longue distance » coopérant avec l'unité de traitement 11. Ces deuxièmes moyens de communication permettent à un tel dispositif 10 de pouvoir transmettre à une entité distante, par exemple un serveur RS, des données au travers de messages MC distribués par un réseau RR exploitant, par exemple, les technologies GSM, GPRS ou satellite. Pour fonctionner, c'est-à-dire pour que l'unité de traitement 11 mette en œuvre un procédé découlant de l'interprétation ou de l'exécution, par ladite unité de traitement, d'instructions de programme P enregistrées dans la mémoire de programmes 14, le dispositif 10 comporte une source d'énergie électrique 17, sous la forme d'une ou plusieurs batteries par exemple. La capacité à pouvoir communiquer ou tout simplement à pouvoir fonctionner d'un nœud est directement liée à la capacité énergétique restante et disponible dudit nœud.

Certains ont cherché à concevoir des réseaux ou des procédés de communication, mis en œuvre par des nœuds au sein d'un réseau ou d'une grappe, pour préserver globalement la capacité en énergie électrique du réseau ou de la grappe. A titre d'exemple, le document titré « Energy-based clustering for wireless sensor network lifetime optimization » (T. Ducrocq, N. Mitton, M. Hauspie - IEEE WIRELESS COMMUNICATIONS and Networking Conference, Pages 968-973, AVR. 2013) présente une première approche consistant à répartir le coût énergétique découlant des échanges entre les nœuds sur l'ensemble desdits nœuds du réseau ou de la grappe. On a également cherché à répartir la consommation énergétique découlant des traitements mis en œuvre sur des données collectées, par exemple une émission longue distance, sur la plupart des nœuds, mutualisant ainsi la consommation électrique sur une pluralité de nœuds. Ainsi, que le réseau de communication sans contact soit en configuration simple-saut ou multi-sauts, un nœud peut être arbitrairement désigné en tant que « tête de réseau » ou du moins en tant que « tête de grappe », que nous qualifierons par le terme anglo-saxon « head ». En liaison avec la figure 1, un dispositif agissant en tant que head est représenté par un cercle dessiné en trait épais. Il s'agit du nœud d2 pour le réseau R1 et du nœud h3 pour le réseau R2. Les nœuds d2 et h3 agissent ainsi en tant que heads respectivement des grappes C1 et C2. De cette manière, l'énergie consommée, notamment pour transmettre à distance des données collectées au sein d'un réseau, est mutualisée sur une pluralité de nœuds. En variante, les heads peuvent être aléatoirement désignés, ou plus précisément peuvent aléatoirement s'auto-désigner respectivement head, à la condition que ces derniers disposent de moyens matériels et/ou logiciels suffisants pour mettre en œuvre un service déterminé.

A titre d'exemple, le procédé « LEACH », tel que décrit notamment par le document titré « An Application-Specific Protocol Architecture for Wireless Microsensor Networks » (W. Heinzelman, A. Chandrakasan, H. Balakrishnan - IEEE TRANSACTIONS ON WIRELESS COMMUNICATIONS, VOL. 1, NO. 4, OCT. 2002), permet dans un réseau simple-saut, de désigner aléatoirement un nœud pour qu'il devienne head. Les autres nœuds appartenant à la grappe dudit head, nœuds que nous nommerons respectivement « membre » ou « member » selon une terminologie anglo-saxonne, adressent à la tête de grappe, donc au head, leurs messages de service. En liaison avec la figure 1, chaque nœud membre est représenté par un cercle dessiné en trait fin. Ainsi, au sein du réseau R2, le head h3 communique directement avec les nœuds g2 à g4, h2 et h3 ainsi qu'avec les nœuds i2 à i4. Le head collecte lesdites données émises depuis différents nœuds membres, les traite, les agrège voire les consolide, et déclenche, par exemple, une émission longue portée à destination d'une entité distante, telle qu'un serveur RS décrit en liaison avec la figure 2. Selon cette technique connue, une fois qu'un nœud a assuré le rôle de head, un tel nœud ne peut assurer de nouveau un tel rôle avant l'expiration d'une période déterminée. Un nouveau nœud membre est alors désigné aléatoirement head, assurant ainsi une continuité de service. Pour qu'un nœud, que nous nommerons « libre » ou « loose » selon une terminologie anglo-saxonne, représenté par un cercle dessiné en trait double en liaison avec la figure 1, puisse adhérer à un head et ainsi constituer une nouvelle grappe ou rejoindre une grappe existante, un nœud libre situé à portée radio d'un nœud promu head, est agencé pour recevoir un message d'enrôlement MH émanant dudit head, émis généralement sous la forme d'une émission indifférenciée (également connue sous l'appellation anglo-saxonne « broadcast ») de messages d'enrôlement MH à destination de tout nœud situé à portée radio du head. La figure 1, permet, au travers du réseau R2, de décrire la résultante d'une émission d'un message MH transmis depuis le nœud h3, désigné pour agir en tant que head, message MH transmis selon un mode Broadcast de courte portée aux nœuds situés à portée de communication, en l'occurrence, les nœuds g2 à g4, h2 et h4, ainsi que les nœuds i2 à i4, initialement nœuds libres, à l'instar des autres nœuds, tels que, de manière non exhaustive, les nœuds f1 à f5, représentés par des cercles en traits doubles sur la figure 1. A réception d'un tel message d'enrôlement MH, un nœud libre, par exemple le nœud h4, met à jour sa mémoire de données, ladite mémoire coopérant avec son unité de traitement pour y consigner les coordonnées ou l'identifiant du head, soit l'identifiant du nœud h3 en liaison avec la figure 1. Le dispositif h4 précédemment libre ou nœud libre devient membre de la grappe C2, soit un nœud membre, représenté par un cercle en trait fin. Le dispositif h3, agissant en tant que tête de grappe ou head, devient le destinataire de tout message de service MS comportant des données collectées par le dispositif h4 nouvellement membre de la grappe C2 à l'instar des autres dispositifs membres de ladite grappe, soit g2, g3, g4, i2, i3 et i4. Ainsi, lesdits nœuds g2 à g4, h2 et h4, ainsi que les nœuds i2 à i4, préalablement nœuds libres, deviennent nœuds membres, apparaissant en cercles dessinés en simple trait, sur la figure 1. L'émission du message MH par le nœud h3 est limitée en portée. Aussi des nœuds, situés hors de portée, ne reçoivent pas le message MH comme message intelligible, voire ne le reçoivent pas du tout. Le réseau R2 étant de type simple-saut, les nœuds étant hors de portée de h3, tels que les nœuds f1 à f5, g1, g5, h1, h5, i1, i5 ou encore les nœuds j1 à j5 demeurent nœuds libres, représentés par des cercles dessinés en trait double. La grappe C2 ne comporte que le nœud h3, agissant en tant que head, et les nœuds membres (c'est-à-dire ayant accepté l'enrôlement de h3).

Une transposition de l'enseignement LEACH dans le cadre d'un réseau multi-sauts, comme le réseau R1 décrit en liaison avec la figure 1, pourrait laisser supposer que les nœuds, devenant membres d'une grappe comportant un nœud agissant en tant que tête de grappe, enregistreraient, au sein de leurs mémoires de données respectives, la route, c'est-à-dire, l'identifiant du nœud agissant en tant que head et au moins l'identifiant du nœud ayant relayé le message d'enrôlement dudit head voire, en variante, les identifiants des nœuds intermédiaires le séparant dudit head. Ainsi, à titre d'exemple, le nœud c2 enregistrerait l'identifiant du head d2, ayant reçu directement un message d'enrôlement MH dudit nœud d2. Le nœud b2 enregistrerait, quant à lui, outre l'identifiant du nœud d2, celui-ci du nœud c2 ayant relayé le message d'enrôlement MH de d2 au profit du nœud b2.

Une telle approche permet en théorie, ou du moins selon un mode d'application parfait, de préserver les ressources énergétiques globales d'un réseau de communication comportant une pluralité de nœuds communicants. En pratique ou dans la réalité, et notamment selon des domaines d'application ou d'exploitation d'un tel réseau de communication en lien avec le transport de conteneurs coopérant avec des dispositifs électroniques communicants, une telle solution demeure non pertinente, du moins peu efficace.

Décrivons, à titre d'exemple d'application préférée mais non limitatif, l'exploitation d'un réseau de communication sans fil dont les nœuds consignent, collectent et transmettent des mesures en lien avec une pluralité de conteneurs, tels que des containers de biens ou de marchandises. Imaginons que chaque conteneur soit associé à un dispositif électronique communicant mettant en œuvre un procédé de communication tel que le LEACH. Selon cette hypothèse, chaque dispositif électronique communicant associé à un conteneur agit en tant que nœud au sein du réseau sans fil, tel que le réseau R2 décrit en liaison avec la figure 1. Imaginons, que le mode de communication entre nœuds se fasse par voie radio. Outre le fait qu'un procédé de communication de type LEACH impose une approche simple-saut, imposant ainsi que chaque nœud puisse être en mesure de communiquer directement avec un head, l'agencement relatif des conteneurs, par exemple sur un navire, sur une aire de stockage ou sur toute plateforme de transport routière ou ferroviaire, crée un contexte applicatif tel qu'un nœud désigné head pourrait ne pas être en mesure d'assurer sa mission, consistant par exemple à transmettre des données agrégées à destination d'une unité distante, du seul fait de son positionnement dans un empilement de conteneurs par exemple. En effet, nombreux sont les obstacles constitués par une plateforme de transport et/ou un espace de stockage, du fait de cloisonnages ou de confinements partiels imposés par la structure d'accueil des conteneurs ou encore par les interactions engendrées mutuellement par les conteneurs eux-mêmes, dont l'empilement peut entraîner une dégradation, voire une perte de capacité à pouvoir transmettre des données par voie longue distance de la part d'un head. Le risque de constater une perte de données, des lenteurs d'acheminement desdites données, mais aussi des dépenses énergétiques inutiles et non pertinentes pour « animer » une grappe dont le head ne serait pas capable d'assurer efficacement sa fonction ou service, est très grand. Ce risque l'est d'autant plus dans le cas où l'élection aléatoire de heads consécutifs se traduirait par un « choix » peu fructueux. Une transposition d'un tel enseignement à un réseau multi-sauts ne saurait être davantage pertinente. En effet, bien que permettant d'étendre la taille d'une grappe, c'est-à-dire le nombre de nœuds membres de ladite grappe, l'élection aléatoire indépendante de la position relative d'un nœud au regard de ses pairs est susceptible d'aggraver les dépenses énergétiques pour tenter de constituer des grappes, au final peu communicantes, au fur et à mesure des élections de heads.

L'invention permet de répondre à la grande majorité des inconvénients soulevés par les solutions connues. En constituant un réseau de communication sans fil, particulièrement innovant et performant, quel que soit l'agencement relatif des nœuds et quel que soit le cadre applicatif ou d'exploitation dudit réseau, que celui-ci soit de type simple-saut ou multi-sauts, l'invention permet d'optimiser la capacité globale du réseau à assurer un service déterminé à partir de données collectées par les différents nœuds. L'originalité principale du procédé d'adhésion à une grappe de dispositifs communicants réside dans des modalités d'élection de heads, si et seulement si ces derniers sont en capacités réelles d'assumer leur rôle de tête de grappe, par exemple pour émettre des données selon un mode de communication longue distance. Chaque nœud mettant en œuvre un procédé selon l'invention peut décider d'agir en tant que head, à partir du moment où ledit nœud sait qu'il est en situation de tenir efficacement son rôle. Par ailleurs, tout nœud libre peut décider d'adhérer ou non à une grappe de nœuds, ladite grappe comportant ledit head, avantageusement auto-désigné.

Parmi les nombreux avantages apportés par l'invention, nous pouvons mentionner que celle-ci permet :

- de mutualiser de manière pertinente les dépenses énergétiques sur les nœuds du réseau, prolongeant ainsi la capacité à rendre un service dudit réseau de manière inégalée par rapport à l'état de la technique ;
- de concevoir un réseau de nœuds automatiquement adaptable et fonctionnel au gré des changements de positions relatives entre les nœuds ou de l'évolution des conditions d'exploitation desdits nœuds, par exemple lors de la manutention, du stockage ou du transport de conteneurs associés chacun à un dispositif électronique conforme à l'invention ;
- de privilégier la robustesse du service (par exemple l'émission de données par voie longue distance) en conférant à chaque nœud conforme à l'invention, l'opportunité de déterminer son rôle au sein du réseau et de se référer à chaque instant au meilleur head selon le service considéré, tout en minimisant les conflits ou modification de grappes lors d'élections concomitantes d'une pluralité de heads situés à portée radio de nœuds communs.

L'invention est définie par un procédé selon la revendication 1 et un programme d'ordinateur selon la revendication 9. Des modes de réalisation supplémentaires sont définis dans les revendications dépendantes.

A cet effet, l'invention concerne un procédé d'adhésion à une grappe comprenant une pluralité de dispositifs électroniques communicants, ledit procédé étant mis en œuvre par une unité de traitement de l'un desdits dispositifs électroniques communicants ou d'un dispositif électronique communicant étranger à ladite grappe. Ledit dispositif électronique comporte, outre ladite unité de traitement, une mémoire de données, des premiers moyens de communication assurant une communication de proximité sans fil avec tout autre dispositif électronique situé à portée de communication, ladite mémoire et lesdits moyens de communication coopérant avec ladite unité de traitement. La mémoire de données comporte la valeur d'un identifiant dédié au dispositif électronique communicant et un enregistrement pour comporter la valeur courante d'un identifiant d'un dispositif électronique communicant agissant en tant que tête de grappe. Pour que le dispositif, mettant en œuvre un tel procédé, puisse adhérer à une grappe comprenant un dispositif agissant en tant que tête de grappe, ledit procédé comporte :

- une étape pour recevoir un message d'enrôlement élaboré et émis par un dispositif électronique communicant tiers ayant qualité à agir en tant que tête de grappe, ledit message d'enrôlement comportant l'identifiant du dispositif émetteur dudit message d'enrôlement et une donnée traduisant la capacité dudit dispositif émetteur à pouvoir assurer un service donné ;
- une étape pour décoder ledit message d'enrôlement et pour en déduire ledit identifiant dudit dispositif émetteur du message d'enrôlement et la donnée traduisant ladite capacité ;
- une étape pour mettre à jour l'enregistrement pour que ledit enregistrement mémorise, comme valeur courante d'identifiant de dispositif agissant en tant que tête de grappe, la valeur de l'identifiant du dispositif émetteur du message d'enrôlement décodé et la valeur de la donnée traduisant la capacité du dispositif émetteur à assurer ledit service, ledit dispositif mettant en œuvre ledit procédé devenant membre de grappe.

Pour notamment mutualiser de manière pertinente les dépenses énergétiques sur l'ensemble des nœuds d'un réseau particulièrement robuste, prolonger la capacité à rendre un service par ledit réseau, l'étape d'un tel procédé pour mettre à jour l'enregistrement n'est accomplie que si la donnée traduisant ladite capacité est supérieure ou égale à un seuil minimal d'exigence déterminé, ledit dispositif mettant en œuvre ledit procédé devenant membre de la grappe dont le dispositif agissant en tant que tête de grappe comporte un identifiant dont la valeur est égale à la valeur courante d'identifiant mémorisée dans ledit enregistrement.

Pour qu'un dispositif mettant en œuvre un procédé d'adhésion selon l'invention puisse sélectionner un candidat pertinent parmi une pluralité de dispositifs ayant émis un message d'enrôlement, voire arbitrer une compétition entre deux ou plusieurs dispositifs désignés pour agir en tant que têtes de grappe, un procédé d'adhésion conforme à l'invention peut comporter une étape subséquente à l'étape pour décoder un message d'enrôlement et préalable à l'étape pour mettre à jour l'enregistrement comprenant la valeur courante de l'identifiant du dispositif agissant en tant que tête de grappe. Une telle étape peut consister à :

- lire au sein dudit enregistrement la valeur courante de l'identifiant du dispositif agissant en tête de grappe ;
- comparer ladite valeur courante à celle de l'identifiant du dispositif émetteur du message d'enrôlement décodé.

Si lesdites valeurs d'identifiant sont distinctes, l'étape pour mettre à jour l'enregistrement ne peut être avantageusement accomplie que si la donnée traduisant la capacité du dispositif émetteur du message d'enrôlement à assurer un même service est supérieure ou égale à la valeur de la donnée traduisant la capacité courante du dispositif agissant en tant que tête de grappe augmentée d'une constante déterminée.

Dans le cadre d'une mise en œuvre de l'invention en réseau multi-sauts, un procédé d'adhésion conforme à l'invention peut comporter une étape subséquente à l'étape pour mettre à jour l'enregistrement, pour encoder et émettre via les moyens de communication un message d'enrôlement relayé comportant l'identifiant du dispositif inscrit dans l'enregistrement comprenant la valeur courante de l'identifiant du dispositif agissant en tant que tête de grappe, la donnée traduisant la capacité dudit dispositif à pouvoir assurer le service, ainsi que l'identifiant du dispositif mettant en œuvre ledit procédé d'adhésion et agissant en tant que membre de grappe relayeur du message d'enrôlement.

Selon cette variante, l'étape pour décoder un message d'enrôlement relayé peut avantageusement consister à déduire dudit message la valeur de l'identifiant d'un dispositif agissant en tant que membre de grappe et ayant relayé un message d'enrôlement. L'étape pour mettre à jour l'enregistrement peut, quant à elle, consister en outre à inscrire au sein dudit enregistrement ledit identifiant du dispositif membre de grappe, relayeur du message d'enrôlement, le couple d'identifiants des dispositifs membre de grappe et tête de grappe constituant ainsi une information de route.

Pour contribuer au service déterminé, un procédé d'adhésion, conforme à l'invention et mis en œuvre par un nœud membre d'une grappe, peut comporter une étape pour émettre un message de service à destination du dispositif agissant en tant que tête de grappe pour le service considéré.

Lorsqu'un dispositif agissant en tant que tête de grappe ne souhaite plus agir en tant que tel, il peut émettre un message de destruction de grappe. Un procédé d'adhésion conforme à l'invention, peut comporter :

- une étape pour recevoir un message de destruction de grappe élaboré et émis par un dispositif électronique communicant tiers ayant préalablement qualité à agir en tant que tête de grappe, ledit message de destruction de grappe comportant l'identifiant du dispositif émetteur dudit message de destruction de grappe ;
- une étape pour décoder ledit message de destruction de grappe et pour en déduire ledit identifiant dudit dispositif émetteur du message de destruction de grappe ;
- une étape pour mettre à jour l'enregistrement comportant la valeur courante d'un identifiant d'un dispositif agissant en tant que tête de grappe pour effacer ladite valeur courante ou remplacer celle-ci par une valeur prédéterminée traduisant une absence d'identifiant de dispositif agissant en tant que tête de grappe, ledit dispositif mettant en œuvre ledit procédé devenant libre, ladite mise à jour de l'enregistrement n'étant effectuée que si la valeur de l'identifiant déduit du message de destruction de grappe est identique à la valeur courante inscrite dans ledit enregistrement.

Un procédé d'adhésion conforme à l'invention peut permettre à tout dispositif le mettant en œuvre de s'auto-désigner ou de s'auto-élire nœud agissant en tant que tête de grappe, indépendamment des modalités d'adhésion à une grappe. Toutefois, afin qu'une telle élection soit pertinente, quelles que soient les conditions d'exploitation dudit réseau, un tel procédé d'adhésion peut comporter :

- une étape pour évaluer la capacité du dispositif, mettant en œuvre ledit procédé, à assumer un service déterminé, ladite étape consistant à estimer un ou plusieurs paramètres de fonctionnement dudit dispositif et produire la donnée traduisant la capacité dudit dispositif à pouvoir assurer le service déterminé ;
- une étape pour comparer la donnée traduisant ladite capacité à un seuil fonctionnel minimal d'exigence ;
- une étape pour encoder et émettre un message d'enrôlement, comportant l'identifiant dudit dispositif ainsi que la donnée traduisant la capacité dudit dispositif à pouvoir assurer ledit service déterminé, à destination de tout dispositif communicant situé à portée de communication, ladite étape n'étant mise en œuvre que si la donnée traduisant ladite capacité est supérieure ou égale audit seuil fonctionnel minimal d'exigence.

Comme évoqué précédemment, un dispositif agissant en tant que tête de grappe et mettant en œuvre un procédé selon l'invention peut détecter qu'il ne remplit plus les conditions nécessaires pour assurer efficacement le service déterminé. Il peut donc, avant de se trouver en échec de fonctionnement, démissionner de son rôle de tête de grappe, une telle démission entraînant la destruction de la grappe de nœuds concernée.

A ce titre, l'étape, précédemment évoquée pour évaluer la capacité du dispositif peut être itérative.

En outre, ledit procédé peut comporter une étape subséquente à l'émission d'un message d'enrôlement, pour encoder et émettre un message de destruction de grappe, ledit message comportant l'identifiant dudit dispositif, à destination de tout dispositif communicant situé à portée de communication, dès qu'une occurrence de l'étape pour évaluer la capacité du dispositif à assumer le service déterminé atteste qu'un paramètre parmi les paramètres de fonctionnement dudit dispositif, est inférieur à un minimum fonctionnel requis, attestant une capacité insuffisante à pouvoir assurer le service.

Que ce soit pour s'auto-élire dispositif apte à agir en tant que tête de grappe ou pour y mettre un terme, le procédé d'adhésion permet de comparer des paramètres de fonctionnement au regard de seuils ou de minima. Selon que le dispositif comporte une source en énergie électrique alimentant l'unité de traitement, la mémoire de données, les moyens de communication, l'invention prévoit que l'un desdits paramètres de fonctionnement puisse décrire le niveau d'énergie électrique disponible de la source en énergie électrique.

En variante ou en complément, selon que ledit dispositif comporte des deuxièmes moyens de communication longue distance coopérant avec l'unité de traitement, le service consistant à émettre des données à une entité distante via lesdits moyens de communication longue distance, l'invention prévoit que l'un desdits paramètres de fonctionnement puisse décrire la puissance d'émission d'un signal par les moyens de communication longue distance.

Quelle que soit la variante de réalisation d'un procédé d'adhésion conforme à l'invention, et afin d'adapter un dispositif électronique communicant pour qu'il puisse mettre en œuvre un tel procédé, l'invention prévoit un programme d'ordinateur comportant une pluralité d'instructions de programme qui, lorsqu'elles sont :

- préalablement enregistrées dans une mémoire de programmes d'un dispositif électronique comportant en outre une unité de traitement, des premiers moyens de communication assurant une communication de proximité sans fil avec tout autre dispositif électronique situé à portée de communication, une mémoire de données enregistrant la valeur d'un identifiant dédié au dispositif et un enregistrement pour comporter la valeur courante d'un identifiant d'un dispositif agissant en tant que tête de grappe, lesdites mémoires et moyens de communication coopérant avec ladite unité de traitement ;
- exécutées ou interprétées par ladite unité de traitement,

provoque la mise en œuvre d'un procédé d'adhésion conforme à l'invention.

Selon un troisième objet, l'invention concerne en outre, un dispositif électronique comportant une unité de traitement, une mémoire de données, une mémoire de programmes, des premiers moyens de communication assurant une communication de proximité sans fil avec tout autre dispositif électronique situé à portée de communication, lesdites mémoires et les moyens de communication coopérant avec ladite unité de traitement, la mémoire de données comportant la valeur d'un identifiant dédié au dispositif et un enregistrement pour comporter la valeur courante d'un identifiant d'un dispositif agissant en tant que tête de grappe. Pour qu'un dispositif puisse être acteur d'un réseau conforme à l'invention, la mémoire de programmes dudit dispositif comporte les instructions d'un programme tel qu'évoqué précédemment.

Selon un quatrième objet, l'invention concerne un système comportant une pluralité de dispositifs électroniques communicants conforme à l'invention, c'est-à-dire mettant en œuvre un procédé d'adhésion conforme à ladite invention.

Selon une application préférée, un tel système peut avantageusement comporter une pluralité de conteneurs de biens, de marchandises solides, fluides ou liquides, lesdits containers coopérant respectivement avec les dispositifs électroniques communicants, ces derniers comportant chacun un capteur coopérant avec l'unité de traitement pour mesurer et collecter une grandeur en lien avec les environnements interne et/ou externe desdits conteneurs.

D'autres caractéristiques et avantages apparaîtront plus clairement à la lecture de la description qui suit se rapportant à un exemple de réalisation donné à titre indicatif et non limitatif et à l'examen des figures qui l'accompagnent parmi lesquelles :

- la figure 1, déjà décrite, illustre deux exemples de configurations d'un réseau de communication sans fil, respectivement simple-saut ou multi-sauts ;
- la figure 2, partiellement déjà décrite, présente l'architecture fonctionnelle d'un dispositif électronique communicant selon l'art antérieur et selon l'invention lorsque ce dernier est adapté pour mettre en œuvre un procédé d'adhésion à une grappe de dispositifs communiquant avec des pairs via un réseau de communication sans fil, ledit procédé étant conforme à l'invention ;
- la figure 3 présente une description fonctionnelle d'un tel procédé d'adhésion selon l'invention.

Un dispositif électronique communicant conforme à l'invention s'apparente à un dispositif 10 connu, tel que celui décrit précédemment en liaison avec la figure 2.

A ce titre, un dispositif électronique communicant conforme à l'invention comporte une unité de traitement 11, consistant en un ou plusieurs microcontrôleurs chargés de mettre en œuvre des traitements sur des données notamment. Lesdites données sont avantageusement, toutes ou parties, enregistrées sur une ou plusieurs mémoires de données 12, généralement électriquement effaçables et inscriptibles. La mémoire 12 peut avantageusement comporter une section non effaçable, physiquement isolée ou simplement agencée pour qu'un accès en écriture ou en effacement soit proscrit, ou requérant la satisfaction d'une procédure d'authentification. Une telle section avantageuse de la mémoire 12, dont l'accès en modification est restreint, permet d'y consigner notamment un identifiant ID dédié au dispositif électronique communicant. Avantageusement, mais de manière non obligatoire, un dispositif 10 peut en outre comporter une ou plusieurs mémoires de programmes 14 pour enregistrer un ou plusieurs programmes P, ou plus généralement un ou plusieurs ensembles d'instructions de programmes, lesdites instructions de programmes étant intelligibles par l'unité de traitement 11 et dont l'exécution ou l'interprétation par ladite unité de traitement provoque la mise en œuvre d'un procédé de traitement de données ou de fonctionnement du dispositif 10. Ce dernier comporte également des premiers moyens de communication 13 assurant une communication de proximité sans fil avec tout autre dispositif électronique, tel que le dispositif 10i, à condition que ce dernier soit à portée de communication. Par l'intermédiaire desdits moyens 13, le dispositif 10, ou plus précisément son unité de traitement 11, peut émettre et/ou recevoir des messages à destination ou en provenance de dispositifs tiers positionnés à portée de communication. De tels messages peuvent être de toute nature. Selon l'invention, nous distinguerons différents types de messages, parmi lesquels nous pouvons mentionner, de manière non exhaustive, des messages de données MS en lien avec un service particulier S, des messages d'enrôlement MH, des messages de destruction de grappe MR.

Certains dispositifs communicants peuvent tirer bénéfice du champ électromagnétique créé par le réseau, pour y puiser l'énergie électrique suffisante pour assurer leurs fonctionnements, ne serait-ce que durant une brève période temporelle. Toutefois, pour assurer un fonctionnement continu et/ou mettre en œuvre des traitements nécessitant davantage d'énergie, un dispositif électronique communicant 10 selon l'invention peut avantageusement comporter une source en énergie électrique 17 propre, alimentant notamment l'unité de traitement 11 voire, tout autre élément constituant ledit dispositif qui en nécessiterait. Une telle source 17 consiste généralement en une batterie ou une pluralité de batteries. Selon le contexte applicatif privilégié en lien notamment avec le suivi de conteneurs, bien que ce contexte particulier ne saurait limiter le champ d'exploitation de l'invention, un dispositif électronique communicant 10 peut comporter un ou plusieurs capteurs 15 coopérant avec l'unité de traitement 11. Un tel capteur peut mesurer une ou plusieurs grandeurs en lien avec les environnements interne et/ou externe desdits conteneurs et en produire des données. A titre d'exemple, comme illustré par la figure 2, un capteur peut mesurer la température et/ou l'humidité régnant au sein d'un conteneur, l'obscurité ou la perte d'obscurité au sein de l'enceinte attestant une ouverture inopinée du conteneur voire encore, des chocs. Si nécessaire, le ou les capteurs peuvent coopérer avec l'unité de traitement d'un dispositif via des sondes ou des nappes conductrices, notamment dans le cas où un dispositif 10 serait apposé contre la paroi extérieure d'un conteneur alors que l'on souhaite superviser, au moyen dudit dispositif 10, l'environnement intérieur dudit conteneur. Un tel dispositif 10 peut en outre comporter une horloge lui permettant d'horodater les mesures collectées, ladite horloge n'étant pas représentée en figure 2.

Selon le ou les services que l'on souhaite opérer à l'aide de dispositifs électroniques communicants selon l'invention, ces derniers peuvent comporter des moyens additionnels et optionnels. A titre d'exemple préféré, un service peut consister à :

- collecter des données auprès des nœuds d'un réseau de dispositifs électroniques communicants conformes à l'invention, par exemple en lien avec des grandeurs mesurées par lesdits nœuds ;
- à agréger lesdites données collectées auprès d'une pluralité de nœuds, puis à élaborer des messages MC encodant des données de service consolidées à destination d'une entité distante, telle qu'un serveur RS.

Pour émettre de tels messages MC, un dispositif 10 comporte avantageusement des deuxièmes moyens de communication longue distance 16 coopérant avec l'unité de traitement 11. Une telle communication peut être réalisée via un réseau RR, par voies GPRS, satellite voire, toute autre voie de communication adaptée. Les différents constituants internes du dispositif électronique coopèrent avec l'unité de traitement 11, avantageusement par bus filaires ou par couplages. Le dispositif 10 comporte un boîtier abritant lesdits constituants, ledit boîtier comportant avantageusement des moyens de fixation pour apposer le dispositif 10 sur un support dont on souhaite assurer le suivi, en l'occurrence un conteneur suivant l'exemple d'application préféré.

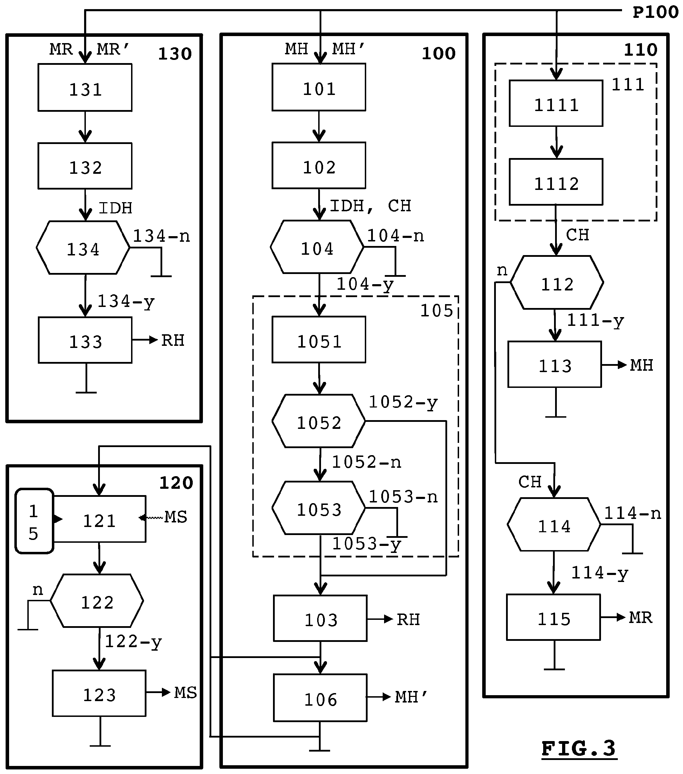

Pour mettre en œuvre l'invention, il est requis d'agir sur le fonctionnement de l'unité de traitement, plus précisément sur le procédé de communication mis en œuvre par ladite unité de traitement. Un tel procédé sera décrit en liaison avec la figure 3 ultérieurement. Un mode d'adaptation préféré consiste à prévoir un programme ou plus généralement des instructions de programmes mutuellement agencées pour mettre en œuvre ledit procédé lors de l'exécution ou l'interprétation desdites instructions de programme par l'unité de traitement. Avantageusement, ledit programme P est chargé dans la mémoire de programmes 15 lors de l'assemblage dudit dispositif ou, par téléchargement dudit programme au sein de la mémoire 15 après ladite phase d'assemblage du dispositif.

L'invention réside principalement dans la mise en œuvre d'un réseau simple-saut ou avantageusement multi-sauts, pour lequel chaque nœud consiste en un dispositif électronique communicant tel que le dispositif 10 précédemment décrit. Un nœud d'un tel réseau est adapté pour mettre en œuvre un procédé d'adhésion à une grappe de dispositifs, tel que le procédé P100 décrit plus loin en liaison avec la figure 3. Pour cette mise en œuvre, l'invention prévoit que la mémoire de données 12 comporte, outre l'identifiant ID dédié au dispositif électronique communicant, un enregistrement RH prévu pour comporter la valeur courante IDHc d'un identifiant d'un dispositif électronique communicant agissant en tant que tête de grappe, tel que les nœuds d2 ou h3 selon la figure 1.

Selon l'invention, lorsqu'un dispositif choisit d'adhérer à une grappe dont l'un des nœuds agit en tant que tête de grappe, cette adhésion est exclusive. En d'autres termes, un nœud ne peut être membre de grappes distinctes, c'est-à-dire ayant respectivement des nœuds heads distincts, pour un même service. Selon l'invention, comme nous le verrons plus loin, un nœud adhérant à une grappe choisit le meilleur head pour ledit service.

En revanche, l'invention prévoit qu'un nœud puisse être rattaché à une pluralité de heads, si lesdits heads sont assignés à la mise en œuvre de services distincts : par exemple un head pour l'émission de données longue distance (service Si) et un deuxième head pour la mise en œuvre d'un service de gestion d'alarmes (service Sj) sur un site.

A ce titre, à l'instar de la solution LEACH, précédemment présentée, l'invention permet de créer des grappes de dispositifs électroniques communicants, telles que les grappes C1 et C2 des réseaux R1 et R2 décrits en liaison avec la figure 1, lesdites grappes comportant un dispositif agissant en tant que tête de grappe ou head, tel que les nœuds d2 ou h3 décrits en liaison avec la figure 1, les autres dispositifs agissant en tant que membres de ladite grappe, tels que, de manière non exhaustive, les nœuds c2 ou i3 décrits en liaison avec la figure 1. Le rôle d'un membre consiste principalement à collecter des informations, telles que par exemple des mesures de grandeurs environnementales, de les traduire en données puis d'encoder lesdites données sous la forme d'un message de service MS à destination d'une tête de grappe ou head en capacité d'assurer le service déterminé. Ce head reconnaît lesdits messages de service MS puis met en œuvre le service déterminé S. Par exemple, un tel service peut consister à agréger les données transmises au head depuis plusieurs membres via des messages MS, puis à mettre en œuvre une transmission longue distance desdits données agrégées voire consolidées sous la forme de messages MC à destination d'une entité distante RS.

Classiquement, un message de service MS, adressé depuis un membre d'une grappe à destination d'un head, est structuré de sorte à comporter une information caractérisant le type du message (MS, MH, MR, etc.), un identifiant du nœud source, par ailleurs généralement membre, un identifiant du nœud destinataire, en l'occurrence un head, voire un identifiant d'un nœud intermédiaire dans le cas d'un réseau multi-sauts, des données, par exemple en lien avec des grandeurs mesurées par un capteur du dispositif, éventuellement un code de redondance voire un cryptogramme ou tout autre information de contrôle permettant à un nœud réceptionnaire de décoder un tel message de service, de l'exploiter ou de le relayer. Un message MS, comme tout autre message circulant au sein du réseau, peut déclencher des messages d'accusé de réception MACK, transmis par le réceptionnaire du message à destination du nœud source. A l'extension d'une période déterminée ou « timeout » selon une terminologie anglo-saxonne, si aucun message MACK n'est reçu, une nouvelle émission du message MS est déclenchée, et ce, pour un nombre limité d'itérations, à l'issue duquel, le nœud source considère que la « route » ou la communication avec le destinataire n'est pas ou plus disponible. Un tel nœud source peut décider d'abandonner la grappe et de recouvrer un statut de nœud libre.

L'adhésion d'un nœud libre à un nœud agissant en tant que tête de grappe ou head est proche de celle mise en œuvre selon la solution LEACH. Toutefois, les modalités d'élection d'un head et les modalités d'adhésion d'un nœud libre pour devenir membre d'une grappe, sont très différentes.

Contrairement à l'état de la technique, l'élection d'un dispositif électronique communicant ne découle pas d'un aléa. Bien au contraire, selon l'invention, seuls des nœuds en réelle capacité d'assurer un service déterminé sont aptes à s'auto-désigner heads. De leur côté, les autres nœuds sont libres d'arbitrer une compétition de heads et de choisir le head qui apparaît le meilleur candidat pour mettre en œuvre le service auquel ils contribuent.

La figure 3 illustre un procédé P100 de communication mis en œuvre par un dispositif conforme à l'invention, tel qu'à titre d'exemple un dispositif 10 décrit en liaison avec la figure 2.

Décrivons dans un premier temps, le traitement 110 mis en œuvre par un dispositif électronique communicant 10 conforme à l'invention, mettant en œuvre un procédé P100. Ce dernier comporte une étape d'évaluation 111 de la capacité du dispositif 10 à assurer un service déterminé S pour éventuellement, s'auto-désigner ou s'auto-élire head. Une telle étape 111 peut consister dans un premier temps à estimer, en 1111, un ou plusieurs paramètres de fonctionnement du dispositif 10 pour tester la capacité de celui-ci à assurer correctement ledit service. A titre d'exemple préféré, supposons que ledit service consiste à agréger des données collectées et déduites de messages de service MS, de consolider lesdites données, d'encoder un message MC et d'émettre ce dernier par des moyens de communication longue distance 16 à destination d'un serveur distant dont la mission consiste à tracer des conteneurs coopérant avec des dispositifs communicants. Pour pourvoir assurer ce service, le dispositif doit évidemment comporter des moyens de communication adaptés, tels que les moyens 16. Par ailleurs, une telle communication par exemple de type GPRS, mobilise une quantité d'énergie électrique importante ne serait-ce que pour initier la liaison. Il est donc impératif qu'un dispositif, agissant en tant que tête de grappe, dispose d'une réserve énergétique suffisante pour supporter une telle sollicitation. Par ailleurs, il est également préférable que la puissance d'émission d'un signal par voie GPRS soit des plus optimales. En effet, une puissance d'émission faible engendrerait des lenteurs, donc une durée d'émission accrue et particulièrement consommatrice en énergie électrique voire, de nouvelles tentatives d'émissions successives en cas d'échec ou encore des pertes pures et simples de messages MC.

Selon un premier mode de réalisation, l'invention prévoit que l'étape 1111 puisse consister en une étape d'autotest ou d'auto-évaluation du dispositif, par exemple, du niveau de batterie 17. L'unité de traitement 11 peut en outre, par exemple, tester la puissance d'émission d'un signal par voie GPRS. Ladite unité de traitement peut en outre examiner en 1111 d'autres paramètres fonctionnels du dispositif, par exemple, le nombre d'émissions de messages MC. Par exemple, un compteur d'envois de messages MC peut être mis en œuvre par l'unité de traitement 11, compteur dont la valeur peut être enregistrée dans la mémoire 12. L'estimation de la sollicitation du dispositif 10 en tant que head peut consister en la lecture dudit compteur en mémoire 12.

Le procédé P100 provoque avantageusement la mise en œuvre, par l'unité de traitement du dispositif 10, d'une étape 112 pour confronter les paramètres fonctionnels estimés à des minima fonctionnels prédéterminés. Préalablement, une donnée CH est produite en 1112, traduisant la capacité dudit dispositif 10 à pouvoir assurer le service déterminé S. A titre d'exemple, la production d'une telle donnée CH par l'unité de traitement, peut consister à l'évaluation d'une équation ou d'une fonction prédéfinie produisant une métrique intégrant lesdits paramètres estimés, éventuellement respectivement pondérés pour privilégier un paramètre par rapport à un autre. Par exemple, une estimation de puissance d'émission GPRS peut consister à calculer un ratio correspondant à la puissance d'émission estimée d'un signal de test, divisée par une constante décrivant une puissance maximale typique, c'est-à-dire, lors de conditions optimales d'émission.

En lien avec le niveau de batterie ou plus généralement de la source énergétique 17 du dispositif, l'étape 1112 peut contraindre l'unité de traitement à calculer un ratio correspondant à l'énergie disponible estimée au regard de l'énergie à pleine charge.

Plus généralement, une telle métrique CH caractérisant la capacité d'un dispositif à agir en tant que tête de grappe peut se calculer, de manière non limitative, par l'évaluation d'une équation telle que :

$$CH = K_1 . f_1(p1) + K_2 . f_2(p2) + \ldots K_i . f_i(p_i)$$

pour laquelle, K1, K2, ..., Ki constituent des poids, éventuellement distincts, $f_1()$, $f_2()$, ..., $f_i()$ sont des fonctions de calcul éventuellement distinctes, par exemple l'élaboration d'un ratio et $p_1$, $p_2$, ..., $p_i$ sont des paramètres fonctionnels du dispositif, dont, à titre d'exemple non limitatif, le niveau d'énergie électrique de la source 17, une puissance d'émission longue distance, la taille d'une mémoire disponible pour enregistrer des données, une puissance de calcul, etc.

La donnée CH peut ainsi s'apparenter à une valeur réelle. Elle peut également être composite, c'est-à-dire, être une donnée structurée, comportant chaque paramètre fonctionnel du dispositif ou comportant, en lieu et place, d'un desdits paramètres fonctionnels, une fonction déterminée d'un desdits paramètres fonctionnels.

Une donnée CH étant produite en 1112, un procédé selon l'invention comporte avantageusement une étape 112 pour comparer ladite donnée CH, qui traduit la capacité du dispositif à assurer un service déterminé, à un seuil fonctionnel minimal d'exigence. Dans le cas où la donnée CH est structurée, il en est de même pour ledit seuil. La comparaison 112 consisterait alors en autant de comparaisons indépendantes d'un paramètre fonctionnel à des seuils fonctionnels minimaux d'exigence particuliers, auxquelles serait appliquée une logique combinatoire (de type ET, OU, etc.).

Si l'étape 112 démontre que la donnée CH est supérieure ou égale audit seuil fonctionnel minimal d'exigence (lien référencé 112-y en figure 3), le procédé P100 comporte avantageusement une étape 113 pour encoder et émettre un message d'enrôlement MH. Un tel message MH comporte l'identifiant du dispositif, que nous référençons IDH, en tant qu'identifiant d'un dispositif élu pour agir en tant que head, ainsi que la donnée CH traduisant la capacité dudit dispositif à pouvoir assurer le service déterminé S. Ce message MH peut comporter une donnée caractérisant ledit service S. Le message MH produit en 113, est diffusé (par exemple « broadcasté ») par les premiers moyens de communication 13 dudit dispositif sous l'action de l'unité de traitement mettant en œuvre ledit procédé. Tout dispositif communicant situé à portée de communication, tel que le dispositif 10i décrit en figure 2, peut réceptionner ledit message MH.

L'étape 111 pour estimer la capacité à assurer un service donné, peut être réalisée de manière itérative, par exemple, selon des périodes temporelles prédéterminées ou de tout autre événement déclencheur. Un tel événement peut par exemple consister en l'atteinte d'un nombre prédéterminé d'envois de messages MC. La durée d'une telle période d'évaluation sera déterminée judicieusement selon, notamment, le nombre de nœuds composant le réseau. En effet, une période trop grande augmente le risque que des dispositifs agissant en tant que heads, le demeurent alors qu'ils ne sont plus en capacité d'assurer le service efficacement. Une période trop petite augmente, certes l'aptitude du réseau à exploiter des heads efficaces mais, implique un grand nombre d'émissions et de réceptions de messages d'enrôlement ainsi que de nombreuses constitutions et destructions de grappes, diminuant ainsi la capacité énergétique globale dudit réseau.

A l'issue de la production en 1112 de la donnée CH, si les minima fonctionnels en 112 sont satisfaits, un nouveau message d'enrôlement MH est émis. Nous verrons ultérieurement, comment un dispositif conforme à l'invention exploite la réception d'un tel message d'enrôlement MH, notamment pour adhérer à une grappe ou demeurer membre d'une telle grappe.

L'invention prévoit en outre que si, en revanche, la comparaison 112 atteste que les paramètres fonctionnels d'un dispositif ne satisfont pas aux minima fonctionnels en 112, il n'y a pas d'émission de message d'enrôlement. Ainsi, tout dispositif électronique conforme à l'invention qui n'est pas en capacité d'assurer un service donné, quand bien même il dispose théoriquement des moyens matériels ou logiciels pour y parvenir, ne peut être élu tête de grappe et constituer une grappe de dispositifs communicants.

L'invention prévoit en outre que le procédé P100 puisse comporter une étape 114, éventuellement jointe à l'étape 112, pour comparer la donnée CH produite en 1112, à un minimum fonctionnel, attestant une capacité insuffisante à pouvoir assurer le service. Un tel seuil minimum peut être prédéterminé et enregistré, à l'instar du seuil exploité à l'étape 112, dans la mémoire 12. Cette étape 114 et a fortiori une étape 115 qui en découle éventuellement, peuvent être avantageusement subséquentes à l'émission 113 d'un message d'enrôlement MH. Si la comparaison 114 confirme (lien 114-y en figure 3) que le dispositif n'est plus capable d'assurer le service S, le procédé P100 selon l'invention peut comporter avantageusement une étape 115 pour encoder et émettre un message de destruction de grappe MR, avantageusement broadcasté. Cette émission d'un message MR, peut être réalisée par les moyens de communication 13 du dispositif, sous l'impulsion de l'unité de traitement 11 mettant en œuvre le procédé P100. A l'instar d'un message d'enrôlement MH, un message de destruction de grappe MR, émis depuis un dispositif agissant précédemment en tant que tête de grappe mais qui ne se trouve plus en situation de pouvoir assurer efficacement un service déterminé S, comporte l'identifiant dudit dispositif, noté IDR. Il peut également comporter la donnée CH caractérisant la capacité, ou dans ce cas, une incapacité à assurer le service. En variante, un tel message MR peut simplement associer à l'identifiant du dispositif émetteur, une information caractérisant le message MR en tant que message de destruction de grappe. Nous verrons ultérieurement comment est exploitée la réception d'un tel message MR par un ou plusieurs dispositifs membres d'une grappe. Cette étape 115 peut n'être avantageusement déclenchée que si le dispositif émetteur agissait préalablement en tant que heads, afin de ne pas émettre inutilement des messages de destruction d'un grappe non pertinents et de prévenir également toute exploitation indue de tels messages par des nœuds réceptionnaires. Pour qu'un dispositif conforme à l'invention puisse détecter qu'il était préalablement en situation d'assurer un rôle de head, l'unité de traitement 11 dudit dispositif peut par exemple exploiter un compteur d'émission de messages MC, tel qu'évoqué précédemment, enregistré en mémoire 12. Lors de la comparaison 114, une valeur dudit compteur, supérieure à sa valeur initiale, enseigne que ledit dispositif agissait en tant que tête de grappe. A l'issue de l'émission d'un message MR, ledit compteur peut être remis à la valeur initiale. Toutefois, toute autre action pourrait être mise en œuvre par l'unité de traitement 11 pour valider la mise en œuvre de l'étape 115, en lieu et place de l'exploitation du compteur d'émission de messages MC. A titre d'exemple non limitatif, une telle action peut découler de la réception, par le dispositif agissant en tant que head, d'un message d'enrôlement émanant d'un dispositif tiers, agissant lui aussi en tant que head et dont la donnée traduisant sa capacité à assurer un même service est supérieure à la sienne. Dans ce cas, le dispositif déclenche l'étape 115, s'effaçant ainsi devant meilleur que lui. Selon cette dernière variante, l'invention prévoit de limiter le nombre d'émissions de messages de destruction de grappe MR, conséquence directe d'une évolution particulièrement dynamique et oscillante de capacités de nœuds à agir en tant que heads, entraînant une compétition très soutenue entre de nombreux heads. Une telle situation peut par exemple être rencontrée lors d'un transport ferroviaire d'une multitude de conteneurs, coopérant chacun avec un dispositif communicant conforme à l'invention et pour lequel, le service déterminé consiste à émettre régulièrement par voie GPRS des informations en lien avec le contenu des conteneurs. L'aptitude des heads à émettre par voie longue distance peut être très changeante. Pour répondre à cette difficulté, l'invention prévoit d'intégrer dans la mise en œuvre de l'étape 114, un « facteur de compétition », par exemple un réel positif, supérieur à « 1 » dont la valeur peut être enregistrée dans les mémoires 12 des différents nœuds. Ainsi, un head, réceptionnant un message d'enrôlement MH émanant d'un nœud tiers, ne compare pas, à l'étape 114, strictement les données CH traduisant les capacités respectives à assurer un même service. L'étape 114 consiste à comparer la donnée CH déduite du message d'enrôlement MH multipliée par le facteur de compétition. Ainsi, si ledit facteur est supérieur à « 1 », par exemple « 1,25 », alors le nœud, mettant en œuvre l'étape 114, est pénalisé par l'exploitation dudit facteur au regard du concurrent. Ainsi, même si la donnée CH dudit nœud traduit une meilleure capacité que celle du head ayant émis le message MH, l'application du facteur de compétition, améliore virtuellement celle du compétiteur. Dans ce cas, le nœud met en œuvre l'étape 115, transmet un message de destruction de grappe MR et rejoint la grappe du concurrent en tant que membre. Une telle solution permet de limiter des créations/destructions de grappe trop nombreuses et obérant la capacité énergétique du réseau. Elle permet en outre de limiter le nombre de nœuds aptes à agir concomitamment en tant que heads. En effet, selon le service S envisagé, par exemple comportant une émission longue distance, un trop grand nombre de nœuds agissant de concert en tant que heads, puiserait, par exemple, trop dans les réserves énergétiques du réseau. Le facteur de compétition peut donc être vu comme un paramètre de régulation du nombre de heads et de la dynamique de l'adaptabilité du réseau à son environnement.

Etudions à présent, le traitement 100 réalisé par l'unité de traitement 11 d'un dispositif 10, lors de la mise en œuvre d'un procédé d'adhésion P100, en réaction à la réception d'un message d'enrôlement MH.

Indépendamment du traitement 110 mis en œuvre par l'unité de traitement 11 d'un dispositif 10 pour s'auto-élire ou être désigné head, ladite unité de traitement 11 d'un dispositif conforme à l'invention met en œuvre un traitement 100 comportant ainsi une première étape 101 pour recevoir un message d'enrôlement MH élaboré et émis par un dispositif électronique communicant, tel que le nœud d2 ou le nœud h3, décrits en liaison avec la figure 2. Un tel message d'enrôlement MH comporte l'identifiant IDH du dispositif émetteur dudit message d'enrôlement. Le procédé P100 comporte en outre une étape 102 pour décoder ledit message d'enrôlement MH et pour en déduire ledit identifiant IDH. Il comporte en outre une étape 103 pour mettre à jour un enregistrement RH, agencé au sein de la mémoire de données 12, ledit enregistrement étant prévu pour consigner la valeur de l'identifiant IDH en tant que valeur courante IDHc d'identifiant d'un dispositif élu pour agir en tant que tête de grappe, par exemple le dispositif d2 ou le dispositif h3 illustrés par les figures 1 et 2.

Le message MH ainsi décodé comporte en outre une donnée CH traduisant la capacité dudit dispositif émetteur à pouvoir assurer un service donné S. L'étape 102 pour décoder ledit message d'enrôlement MH en déduit en outre ladite donnée CH. Selon l'invention, lors de la mise à jour 103 de l'enregistrement RH, la valeur de la donnée CH traduisant la capacité du dispositif émetteur à assurer ledit service S, est également inscrite dans ledit enregistrement RH. La valeur enregistrée est notée CHc, pour traduire la capacité courante du head à assurer le service. Dans un réseau, tel que le réseau R2 décrit en liaison avec la figure 1, c'est-à-dire un réseau simple-saut, le dispositif 10 venant de mettre en œuvre un tel procédé P100, devient membre de la grappe dont l'émetteur du message MH agit en tant que tête de grappe. C'est par exemple le cas des dispositifs agissant comme des nœuds membres de la grappe C2 décrite en liaison avec la figure 1. Contrairement à des nœuds mettant en œuvre par exemple la technologie LEACH, les membres d'une grappe conformes à l'invention ont la certitude que le nœud agissant en tant que head est bien en capacité d'assumer un service donné. La mémorisation de la capacité dudit head dans l'enregistrement RH lui permet, à réception d'un nouveau message MH émis par un autre dispositif émetteur, de comparer éventuellement la capacité du head courant avec celle d'un nouveau candidat. Nous étudierons le cas de la compétition entre heads ultérieurement, compétition arbitrée par des nœuds membres ou libres.

L'invention prévoit en outre qu'un nœud d'ores et déjà membre d'une grappe et/ou qu'en variante un nœud libre puisse décider d'adhérer au nœud ayant émis un message MH. Ainsi, selon une variante préférée, l'étape 103 du procédé d'adhésion P100, pour mettre à jour l'enregistrement RH peut n'être accomplie, que si la donnée CH, traduisant la capacité du nœud souhaitant agir en tant que tête de grappe, est supérieure ou égale à un seuil minimal d'exigence déterminé. Le procédé P100 comporte ainsi une étape 104 pour comparer la donnée traduisant la capacité déduite en 102 du message RH au dit seuil minimal d'exigence. Ainsi, un nœud 10 candidat à l'adhésion à une grappe peut être davantage exigent ou sélectif que les critères minimaux d'élection d'un head. Ledit seuil minimal d'exigence exploité par le nœud candidat à l'adhésion peut être d'une structure similaire à celle du seuil exploité par le head lors son auto-élection. Ledit seuil minimal d'exigence est avantageusement enregistré dans la mémoire de données 12, voire constitue une constante prédéfinie et fixée dans la mémoire de programmes 14. Il peut être avantageusement identique pour tous les nœuds.

Comme évoqué précédemment, des messages d'enrôlement MH peuvent être régulièrement initiés et émis par un ou plusieurs dispositifs communicants situés à portée de communication radio, tels que le dispositif 10i décrit en liaison avec la figure 2. Un dispositif 10, agissant en tant que membre d'une grappe, peut donc être en situation de recevoir et de décoder un message d'enrôlement MH alors que ledit dispositif 10 est d'ores et déjà attaché à un head.

Deux cas se présentent. Selon une première situation, le dispositif 10 a d'ores et déjà exploité un message d'enrôlement MH émis par un même dispositif agissant en tant que head. La valeur d'identifiant IDH de ce dernier est donc identique à celle IDHc mémorisée dans l'enregistrement RH, ledit enregistrement étant agencé dans la mémoire de donnée 12 du dispositif 10. Selon une deuxième situation, la valeur de l'identifiant IDH déduite du message MH est distincte de la valeur IDHc. Le dispositif membre se trouve en situation d'arbitrer une compétition entre deux dispositifs tiers en capacité d'assumer un même service.

Le procédé P100 comporte une étape 105 subséquente à l'étape pour décoder 102 un message d'enrôlement MH et préalable à l'étape pour mettre à jour 103 l'enregistrement RH comprenant la valeur courante IDHc de l'identifiant du dispositif agissant en tant que tête de grappe. Cette étape 105 consiste avantageusement à lire en 1051, au sein dudit enregistrement RH, ladite valeur courante IDHc. Puis l'étape 105 consiste à comparer en 1052 ladite valeur courante IDHc à celle IDH de l'identifiant du dispositif émetteur du message d'enrôlement MH décodé en 102. Dans le cas de la première situation, ci-dessus évoquée, lesdites valeurs IDHc et IDH sont identiques (situation symbolisée par le lien 1052-y en figure 3). L'enregistrement RH peut ainsi être mis à jour à l'étape 103. Cette action permet notamment de mettre à jour la donnée CH au sein de l'enregistrement RH. En effet, selon l'évolution du contexte de fonctionnement du head, la capacité de ce dernier à assurer le service, a peut-être évolué. Elle s'est peut-être dégradée, par exemple en raison d'une réserve énergétique moindre. Elle s'est peut-être améliorée, en raison de la disparition d'un obstacle qui pénalisait la puissance d'émission d'un signal par voie GPRS.

En revanche, dans le cas où les valeurs IDH et IDHc sont distinctes (situation symbolisée par le lien 1052-n décrit par la figure 3), un dispositif en capacité d'agir en tant que *head* entre en compétition avec celui qui est, aux yeux du membre 10, actuellement le dispositif agissant en tant que tête de grappe. L'invention prévoit que l'étape 105 puisse comporter une étape 1053 pour comparer la donnée CH traduisant la capacité du dispositif émetteur du message d'enrôlement MH à la donnée CHc mémorisée dans l'enregistrement RH et traduisant la capacité à assumer ce même service S par le dispositif agissant actuellement en tant que tête de grappe. Selon un premier mode de réalisation, si la valeur de la donnée CH déduite du nouveau message d'enrôlement est supérieure à la valeur CHc (situation symbolisée par le lien 1053-y), alors l'étape 103 est accomplie pour mettre à jour l'enregistrement RH. La valeur IDHc prend la valeur de l'identifiant de l'émetteur du message d'enrôlement. Le dispositif 10 quitte ainsi la grappe précédente pour adhérer à celle pour laquelle le dispositif émetteur du message MH agit en tant que head. Les messages de service élaborés par le dispositif 10 seront à présent adressés au nouveau head. Dans la situation inverse, si la valeur de la donnée CH déduite du nouveau message d'enrôlement est inférieure ou égale à la valeur CHc (situation symbolisée par le lien 1053-n), alors l'étape 103 n'est pas accomplie, car l'émetteur du message d'enrôlement est moins performant que l'actuelle tête de grappe.

L'invention prévoit un deuxième mode de réalisation visant à limiter des changements trop fréquents de heads. En effet, comme nous le verrons ultérieurement, notamment dans la mise en œuvre d'un réseau multi-sauts conforme à l'invention, un changement de head peut engendrer l'émission de nombreux messages au sein du réseau et obérer la capacité énergétique globale du réseau. Pour limiter le nombre de changements d'adhésion intempestifs, notamment si les données CH et CHc, traduisant les capacités respectives d'assumer un même service, sont très proches, l'invention prévoit de privilégier une certaine « fidélité », bien que très relative, au profit du dispositif agissant actuellement en tant que tête de grappe, quand bien même ce dernier se révèle être moins performant que le dispositif entrant en compétition. Ainsi, si les valeurs d'identifiant IDH et IDHc sont distinctes (situation symbolisée par le lien 1052-n), alors l'étape 103 pour mettre à jour l'enregistrement RH n'est accomplie que si (situation symbolisée par le lien 1053-y en figure 3) un écart significatif, égal à une constante prédéterminée, avantageusement mais non limitativement non nulle, existe au profit du dispositif émetteur du message d'enrôlement. L'étape 1053 peut donc être adaptée afin que la mise à jour 103 de l'enregistrement RH ne soit effectuée que si la donnée CH traduisant la capacité du dispositif émetteur du message d'enrôlement MH est supérieure ou égale à celle mémorisée dans l'enregistrement RH augmentée dudit écart. En variante ou en complément, dans le cadre d'un réseau multi-sauts, l'étape 1053 peut en outre intégrer l'exploitation d'une information DST, traduisant d'une part une distance en nombre de sauts entre le membre et le head postulant et une distance séparant ledit membre de l'actuel nœud agissant en tant tête de grappe. Une telle information DST peut être encodée dans un message MH diffusé dans un réseau multi-sauts comme nous le verrons ci-après. Dans ce cas, l'étape 102 est adaptée pour déduire du message MH ladite information DST. Il en est de même pour l'étape 103 afin d'inscrire dans l'enregistrement RH conjointement à la donnée CH, l'information DST. L'étape 1053 peut mettre en œuvre toute fonction exploitant, de manière éventuellement pondérée, la donnée CH et l'information DST. Ainsi, un head, dont la donnée CH est moins favorable que celle d'un deuxième head en compétition avec le premier, peut être privilégié s'il est plus proche (en nombre de sauts) que ledit deuxième. Le nombre de messages de service par exemple en sera réduit. L'information DST régule ainsi la taille des grappes au sein d'un réseau multi-sauts.

L'invention permet d'opérer un réseau simple-saut ou un réseau multi-sauts tel que le réseau R1 décrit précédemment en liaison avec la figure 1. Selon un tel réseau, il est nécessaire de pouvoir relayer un message d'enrôlement MH au-delà de la portée d'émission du dispositif auto-élu, apte à agir en tant que tête de grappe. L'objectif consiste à ce qu'un tel message MH puisse être exploité par un dispositif libre ou membre d'une éventuelle grappe distincte, afin de créer des grappes comportant un nombre de membres accru par rapport à une grappe au sein d'un réseau simple-saut, pour une portée d'émission courte portée similaire.

L'invention prévoit ainsi qu'un procédé d'adhésion P100 puisse comporter une étape 106, subséquente à l'étape 103, pour mettre à jour l'enregistrement RH du dispositif mettant en œuvre ledit procédé P100. Cette étape additionnelle 106 consiste à encoder et émettre, via les moyens de communication 13, un message d'enrôlement MH relayé comportant l'identifiant du dispositif inscrit dans l'enregistrement RH, ce dernier comprenant la valeur courante IDHc de l'identifiant du dispositif agissant en tant que tête de grappe, la donnée CHc traduisant la capacité dudit dispositif agissant en tant que head à pouvoir assurer un service déterminé, ainsi que l'identifiant du dispositif agissant en tant que membre de grappe relayeur du message d'enrôlement MH émanant du dispositif agissant en tant que head. Dans la suite du document, on parlera de « émetteur d'un message d'enrôlement » pour désigner un dispositif postulant ou agissant en tant que head. On nommera « membre relayeur » ou on qualifiera simplement de « relayeur » pour désigner un dispositif n'agissant pas en tant que head mais relayant simplement un message d'enrôlement « émis », c'est-à-dire, au sens du document, initié par un head. Le message d'enrôlement ainsi relayé, c'est-à-dire réémis par un relayeur est nommé « message d'enrôlement relayé » et référencé MH' afin de le distinguer du « message d'enrôlement » originel MH émis par le head. Comme évoqué précédemment, l'invention prévoit que ledit message d'enrôlement relayé MH' puisse comporter une information DST traduisant la distance, en nombre de sauts, séparant le nœud relayeur du head ayant émis le message d'enrôlement MH. Ainsi, à titre d'exemple non limitatif, si le message MH est relayé une fois, l'information DST vaut « 2 ». Si le message est relayé 3 fois, l'information DST prend la valeur « 4 ».

Selon cette variante, le procédé d'adhésion P100 selon l'invention peut être avantageusement adapté pour que l'étape 102 pour décoder un message d'enrôlement MH ou MH' consiste en outre à déduire dudit message décodé, la valeur de l'identifiant d'un dispositif agissant en tant que membre de grappe relayeur d'un message d'enrôlement et éventuellement l'information DST, si celle-ci existe. L'étape 103 pour mettre à jour l'enregistrement RH agencé dans la mémoire 12 du dispositif ayant réceptionné le message d'enrôlement relayé MH', consiste en outre à inscrire au sein dudit enregistrement, ledit identifiant du dispositif membre de grappe relayeur du message d'enrôlement, voire l'information de distance DST. Le couple d'identifiants des dispositifs membres de grappe et tête de grappe constitue ainsi une information de route inscrite dans l'enregistrement RH.

Cette information de route peut être exploitée pour émettre des messages de service MS à destination du head. En effet, un procédé d'adhésion conforme à l'invention peut comporter une étape 123 pour émettre un message de service MS à destination du dispositif agissant en tant que tête de grappe ou head pour un service S déterminé. Une telle étape 123 fait partie d'un traitement 120 entrepris pour contribuer audit service S. L'étape 123 est mise en œuvre à la suite d'une étape préalable pour, par exemple, collecter depuis un capteur 15 une mesure en lien avec la température régnant au sein d'un conteneur, contre lequel le dispositif 10 mettant en œuvre le procédé P100 est apposé. Bien évidemment, une telle étape 123 est également conditionnée à la présence (étape 122 en figure 3) d'un registre RH comportant la valeur IDHc d'un identifiant d'un dispositif ou nœud agissant en tant que tête de grappe (situation symbolisée par le lien 122-y en figure 3). Selon que ledit enregistrement comporte une route directe, c'est-à-dire que seule une valeur d'identifiant de head n'est présente dans l'enregistrement RH, ou une route indirecte, c'est-à-dire que ledit enregistrement comporte en outre une valeur d'identifiant d'un membre relayeur, le message MS est directement transmis audit head ou audit membre relayeur.

Par ailleurs, une telle émission 123 d'un message de service MS peut être aussi déclenchée par la réception 121 d'un message de service MS émanant d'un membre d'une même grappe et adressé au dispositif 10, qui met en œuvre ledit procédé d'adhésion P100 et agit en tant que membre relayeur. Suite à la réception d'un tel message de service émanant d'un membre d'une même grappe, l'étape 121 peut donc comporter une étape pour recevoir et décoder un tel message MS, voire pour enregistrer temporairement dans la mémoire 12, les données contenues dans ledit message de service MS décodé. Le relai dudit message MS peut se traduire ainsi par une réémission en temps différé.

Etudions à présent un procédé d'adhésion P100 conforme à l'invention et comportant un traitement 130 pour exploiter un message MR de destruction de grappe tel qu'évoqué précédemment.

Un tel traitement 130 d'un procédé d'adhésion P100 conforme à l'invention comporte une première étape 131 pour recevoir un message de destruction de grappe MR élaboré et émis par un dispositif électronique communicant tiers, par exemple le dispositif 10i, ayant eu préalablement qualité à agir en tant que tête de grappe. Comme étudié précédemment en liaison avec les étapes 114 et 115, un message de destruction de grappe MR comporte l'identifiant IDR du dispositif ayant émis ledit message de destruction de grappe MR. Le traitement 130 comporte en outre une étape 132 pour décoder ledit message de destruction de grappe et en déduire la valeur dudit identifiant IDR du dispositif émetteur du message de destruction de grappe. La réception d'un tel message MR par un dispositif agissant en tant que membre de la grappe concernée par le message de destruction, signifie une consigne stricte d'abandon de la grappe, ledit membre recouvrant un statut de nœud libre. Pour cela, le procédé P100 comporte avantageusement une étape 133 pour mettre à jour l'enregistrement RH comportant la valeur courante IDHc de l'identifiant d'un dispositif agissant en tant que tête de grappe, pour effacer ladite valeur courante ou remplacer celle-ci par une valeur prédéterminée traduisant une absence d'identifiant de dispositif agissant en tant que tête de grappe. Bien évidemment, ladite mise à jour 133 de l'enregistrement RH n'est effectuée que si (situation symbolisée par le lien 134-y en liaison avec la figure 3) la valeur de l'identifiant IDR déduite du message de destruction de grappe MR est identique à la valeur courante IDHc inscrite dans ledit enregistrement RH. Le procédé P100 comporte ainsi une étape 134, préalable à l'étape 133, pour mettre en œuvre ladite comparaison de valeurs d'identifiants IDR et IDHc.

Dans le cadre de l'exploitation d'un réseau multi-sauts, à l'instar d'un message d'enrôlement MH, un message de destruction de grappe MR peut être avantageusement relayé par un membre devenant libre par la mise en œuvre de l'étape 133, en déclenchant l'émission d'un tel message relayé MR' à destination d'autres membres éventuels de la grappe en cours de destruction.

Quelle que soit la configuration d'un procédé P100 d'adhésion à une grappe, ledit procédé étant conforme à l'invention, un mode d'adaptation préférée d'un dispositif électronique communicant, tel que celui décrit en liaison avec la figure 2, consiste à enregistrer ou télécharger en mémoire de programmes 14, un programme d'ordinateur P, comportant une pluralité d'instructions de programme qui, lorsqu'elles sont exécutées ou interprétées par l'unité de traitement dudit dispositif, provoquent la mise en œuvre dudit procédé P100.

L'invention a été décrite au travers d'un exemple d'application préférée en lien avec le suivi de conteneurs de biens, de marchandises solides, fluides ou liquides, lesdits containers coopérant respectivement avec des dispositifs électroniques communicants, tels que les dispositifs 10 et 10i selon la figure 2, mettant en œuvre un procédé d'adhésion, tel que le procédé P100 illustré en figure 3, lesdits dispositifs comportant chacun un capteur coopérant avec une unité de traitement pour mesurer et collecter une grandeur en lien avec les environnements interne et/ou externe desdits conteneurs.

De tels dispositifs pourraient être exploités pour une toute autre application distincte de celle visant à émettre des données collectées selon une liaison longue distance. Ils pourraient également, en variante ou en complément, assurer un ou plusieurs autres services. Pour cela, comme nous l'avons évoqué précédemment, la mémoire de données 12 de chaque dispositif peut comporter, non pas un seul enregistrement RH dédié à un service déterminé S, mais une pluralité d'enregistrements RHn, formant une table, chaque enregistrement étant dédié à un service particulier Sn. Les messages d'enrôlement MH, MH', de service MS, voire de destruction de grappe MR, MR', comporteraient, selon cette variante, une information permettant d'identifier le service Sn déterminé et concerné par chacun desdits messages.

Par ailleurs, l'invention concerne ainsi tout système comportant une pluralité de dispositifs électroniques communicants conformes à l'invention. Plus particulièrement, l'invention concerne tout système de traçabilité de conteneurs sur une aire de stockage ou une plateforme de transport, ledit système comportant en outre une entité distante pour collecter et exploiter des messages MC émis depuis un ou plusieurs desdits dispositifs lorsqu'ils agissent en tant que tête de grappe. Un tel système présente des performances, en matière d'autonomie énergétique, de robustesse et d'adaptabilité aux conditions d'exploitation inégalées et sans comparaison possible par rapport à celles conférées par les solutions connues, telles, qu'à titre d'exemple, le procédé LEACH. En effet, grâce à l'invention, l'exploitation de têtes de grappe, depuis leurs élections, jusqu'à la réalisation de la ou des actions concernées par un service déterminé, est optimale, prévenant toute communication superflue ou inefficace au sein du réseau ou à destination d'entités tierces.

**Revendications**

1. Procédé d'adhésion (P100) à une grappe comprenant une pluralité de dispositifs électroniques communicants (10, 10i, a1,...,a8, b1,...,b8, ..., j1,...,j5), ledit procédé étant mis en œuvre par une unité de traitement (11) de chacun desdits dispositifs électroniques communicants ou d'un dispositif électronique communicant étranger (10) à ladite grappe (C1, C2), ledit dispositif électronique comportant outre ladite unité de traitement (11), une mémoire de données (12), des premiers moyens de communication (13) assurant une communication de proximité sans fil avec tout autre dispositif électronique (10i) situé à portée de communication, ladite mémoire (12) et lesdits moyens de communication (13) coopérant avec ladite unité de traitement (11), la mémoire de données (12) comportant la valeur d'un identifiant (ID) dédié au dispositif électronique communicant (10) et un enregistrement (RH) pour comporter la valeur courante d'un identifiant d'un dispositif électronique communicant (d2, h3) agissant en tant que tête de grappe, ledit procédé (P100) comportant :

   - une étape (101) pour recevoir un message d'enrôlement (MH) élaboré et émis par un dispositif électronique communicant tiers (d2, h3), ledit message d'enrôlement (MH) comportant l'identifiant du dispositif (d2, h3) émetteur dudit message d'enrôlement (MH) et une donnée (CH) traduisant la capacité dudit dispositif émetteur à pouvoir assurer un service donné (S) ;
   - une étape (102) pour décoder ledit message d'enrôlement (MH) et pour en déduire ledit identifiant (IDH) dudit dispositif émetteur du message d'enrôlement (d2, h3) et la donnée (CH) traduisant ladite capacité ;
   - une étape (103) pour mettre à jour l'enregistrement (RH) pour que ledit enregistrement mémorise la valeur (IDHc) de l'identifiant (IDH) du dispositif émetteur du message d'enrôlement (MH) décodé et la valeur (CHc) de la donnée (CH) traduisant la capacité du dispositif émetteur à assurer ledit service (S), l'étape pour mettre à jour (103) l'enregistrement (RH) n'étant accomplie que si (104) la donnée (CH) traduisant ladite capacité est supérieure ou égale à un seuil minimal d'exigence déterminé, ledit dispositif mettant en œuvre ledit procédé devenant membre de la grappe dont le dispositif (d2, h3) agissant en tant que tête de grappe comporte un identifiant dont la valeur est égale à la valeur courante d'identifiant (IDHc) mémorisée dans ledit enregistrement (RH) ;
   - une étape pour émettre (123) un message de service (MS) à destination du dispositif (d2, h3) agissant en tant que tête de grappe pour le service (S) considéré ;

   ledit procédé (P100) comportant en outre :

   - une étape pour évaluer (111) la capacité du dispositif (10), mettant en œuvre ledit procédé (P100), à assumer un service (S) déterminé, ladite étape (111) consistant à estimer (1111) un ou plusieurs paramètres de fonctionnement dudit dispositif (10) et produire (1112) la donnée (CH) traduisant la capacité dudit dispositif (10) à pouvoir assurer le service déterminé (S) ;
   - une étape pour comparer (112) la donnée traduisant ladite capacité à un seuil fonctionnel minimal d'exigence ;
   - une étape pour encoder et émettre (113) un message d'enrôlement (MH) comportant l'identifiant (IDH) dudit dispositif ainsi que la donnée (CH) traduisant la capacité dudit dispositif à pouvoir assurer ledit service déterminé (S) à destination de tout dispositif communicant (10i) situé à portée de communication, ladite étape (113) n'étant mise en œuvre que si (112-y) la donnée traduisant ladite capacité est supérieure ou égale audit seuil fonctionnel minimal d'exigence.

2. Procédé (P100) selon la revendication 1, comportant une étape (105) subséquente à l'étape pour décoder (102) un message d'enrôlement (MH) et préalable à l'étape pour mettre à jour (103) l'enregistrement (RH) comprenant la valeur courante de l'identifiant (IDHc) du dispositif agissant en tant que tête de grappe, ladite étape (105) consistant à :

- lire (1051) au sein dudit enregistrement (RH) la valeur courante (IDHc) de l'identifiant du dispositif agissant en tête de grappe ;
- comparer (1052) ladite valeur courante (IDHc) à celle (IDH) de l'identifiant du dispositif émetteur du message d'enrôlement (MH) décodé ;

et pour lequel, si (1052-n) lesdites valeurs (IDHC, IDH) d'identifiant sont distinctes, l'étape pour mettre à jour (103) l'enregistrement (RH) n'est accomplie que si (1053-y) la donnée (CH) traduisant la capacité du dispositif émetteur du message d'enrôlement (MH) à assurer un même service (S) est supérieure ou égale (1053) à la valeur de la donnée (CHc) traduisant la capacité courante du dispositif (d2, h3) agissant en tant que tête de grappe augmentée d'une constante déterminée.

3. Procédé (P100) selon l'une quelconque des revendications précédentes, comportant une étape subséquente à l'étape (103) pour mettre à jour l'enregistrement (RH), pour encoder et émettre (106) via les moyens de communication (13) un message d'enrôlement relayé (MH') comportant l'identifiant du dispositif inscrit dans l'enregistrement comprenant la valeur courante (IDHc) de l'identifiant du dispositif agissant en tant que tête de grappe, la donnée (CHc) traduisant la capacité dudit dispositif à pouvoir assurer le service, ainsi que l'identifiant (ID) du dispositif (10) mettant en œuvre ledit procédé d'adhésion (P100) et agissant en tant que membre de grappe relayeur du message d'enrôlement (MH) émanant du dispositif agissant en tant que tête de grappe.

4. Procédé (P100) selon la revendication précédente, pour lequel l'étape pour décoder (102) un message d'enrôlement relayé (MH') consiste à déduire dudit message la valeur de l'identifiant (IDH) d'un dispositif agissant en tant que membre de grappe et la valeur de l'identifiant d'un dispositif ayant relayé ledit message d'enrôlement, et pour lequel, l'étape pour mettre à jour (103) l'enregistrement (RH) consiste en outre à inscrire au sein dudit enregistrement ledit identifiant du dispositif membre de grappe, relayeur du message d'enrôlement, le couple d'identifiants des dispositifs membre de grappe et tête de grappe constituant ainsi une information de route.

5. Procédé selon l'une quelconque des revendications précédentes, comportant :

- une étape (131) pour recevoir un message de destruction de grappe (MR) élaboré et émis par un dispositif électronique communicant tiers ayant préalablement qualité à agir en tant que tête de grappe, ledit message de destruction de grappe (MR) comportant l'identifiant (IDR) du dispositif émetteur dudit message de destruction de grappe ;
- une étape pour décoder (132) ledit message de destruction de grappe (MR) et pour en déduire ledit identifiant (IDR) dudit dispositif émetteur du message de destruction de grappe ;
- une étape pour mettre à jour (133) l'enregistrement (RH) comportant la valeur courante (IDHc) d'un identifiant d'un dispositif agissant en tant que tête de grappe, pour effacer ladite valeur courante ou remplacer celle-ci par une valeur prédéterminée traduisant une absence d'identifiant de dispositif agissant en tant que tête de grappe, ledit dispositif mettant en œuvre ledit procédé devenant libre, ladite mise à jour (133) de l'enregistrement (RH) n'étant effectuée que si (134-y) la valeur de l'identifiant déduit du message de destruction de grappe est identique à la valeur courante inscrite dans ledit enregistrement.

6. Procédé (P100) selon l'une quelconque des revendications précédentes, pour lequel l'étape pour évaluer la capacité (111) du dispositif (10) mettant en œuvre ledit procédé à assumer un service déterminé (S) est itérative, ledit procédé comportant une étape subséquente à l'émission (113) d'un message d'enrôlement (MH), pour encoder et émettre (115) un message de destruction de grappe (MR), ledit message (MR) comportant l'identifiant dudit dispositif, à destination de tout dispositif communicant (10i) situé à portée de communication, dès qu'une occurrence de l'étape (111) pour évaluer la capacité du dispositif à assumer le service déterminé (S) atteste qu'un paramètre parmi les paramètres de fonctionnement dudit dispositif, est (114) inférieur à un minimum fonctionnel requis, attestant une capacité insuffisante à pouvoir assurer le service.

7. Procédé selon l'une quelconque des revendications précédentes, pour lequel le dispositif comporte une source en énergie électrique (17) alimentant l'unité de traitement, la mémoire de données, les moyens de communication, et pour lequel l'un desdits paramètres de fonctionnement décrit le niveau d'énergie électrique disponible de la source en énergie électrique (17).

**8.** Procédé selon l'une quelconque des revendications précédentes, pour lequel le dispositif comporte des deuxièmes moyens (16) de communication longue distance coopérant avec l'unité de traitement, le service consistant à émettre des données à une entité distante (RS) via lesdits moyens de communication longue distance (16), et pour lequel, l'un desdits paramètres de fonctionnement décrit la puissance d'émission d'un signal par les moyens de communication longue distance (16).

**9.** Programme d'ordinateur (P) comportant une pluralité d'instructions de programme qui, lorsqu'elles sont :

- préalablement enregistrées dans une mémoire de programmes (14) d'un dispositif électronique (10) comportant en outre une unité de traitement (11), des premiers moyens de communication (13) assurant une communication de proximité sans fil avec tout autre dispositif électronique (10i) situé à portée de communication, une mémoire de données (12) enregistrant la valeur d'un identifiant (ID) dédié au dispositif et un enregistrement (RH) pour comporter la valeur courante d'un identifiant d'un dispositif agissant en tant que tête de grappe, lesdites mémoires (12, 14) et moyens de communication (13) coopérant avec ladite unité de traitement (11) ;
- exécutées ou interprétées par ladite unité de traitement (11),

provoque la mise en œuvre d'un procédé selon l'une quelconque des revendications 1 à 6.

**10.** Programme d'ordinateur selon la revendication précédente, pour lequel le dispositif (10) mettant en œuvre ledit procédé comporte une source en énergie électrique (17) alimentant l'unité de traitement (11), la mémoire de données (12), la mémoire de programmes (14), les premiers moyens de communication (13), et pour lequel les instructions, lorsqu'elles sont exécutées ou interprétées par l'unité de traitement du dispositif, provoquent la mise en œuvre d'un procédé selon la revendication 7.

**11.** Programme d'ordinateur selon les revendications 9 ou 10, pour lequel le dispositif mettant en œuvre ledit procédé comporte des deuxièmes moyens de communication longue distance (16) coopérant avec l'unité de traitement (11), et pour lequel les instructions, lorsqu'elles sont exécutées ou interprétées par l'unité de traitement du dispositif, provoquent la mise en œuvre d'un procédé selon la revendication 8.

**12.** Dispositif électronique (10) comportant une unité de traitement (11), une mémoire de données (12), une mémoire de programmes (14), des premiers moyens de communication (13) assurant une communication de proximité sans fil avec tout autre dispositif électronique (10i) situé à portée de communication, lesdites mémoires (12, 14) et moyens de communication (13) coopérant avec ladite unité de traitement (11), la mémoire de données (12) comportant la valeur d'un identifiant (ID) dédié au dispositif et un enregistrement (RH) pour comporter la valeur courante d'un identifiant d'un dispositif agissant en tant que tête de grappe, ledit dispositif (10) étant **caractérisé en ce qu'**il comporte dans la mémoire de programmes (14), les instructions d'un programme (P) selon la revendication 9.

**13.** Dispositif électronique (10) selon la revendication précédente comportant une source en énergie électrique (17) alimentant l'unité de traitement (11), ledit dispositif étant **caractérisé en ce qu'**il comporte dans la mémoire de programmes (14), les instructions d'un programme (P) selon la revendication 10.

**14.** Dispositif électronique (10) selon les revendications 12 ou 13 comportant des deuxièmes moyens de communication longue distance (16) coopérant avec l'unité de traitement (11), ledit dispositif (10) étant **caractérisé en ce qu'**il comporte dans la mémoire de programmes (14), les instructions d'un programme (P) selon la revendication 11.

**15.** Système comportant une pluralité de dispositifs électroniques communicants (10, 10i) conformes à l'une quelconque des revendications 12 à 14.

**16.** Système selon la revendication précédente comportant une pluralité de conteneurs de biens, de marchandises solides, fluides ou liquides, lesdits containers coopérant respectivement avec les dispositifs électroniques communicants (10, 10i), ces derniers comportant chacun un capteur (15) coopérant avec l'unité de traitement (11) pour mesurer et collecter une grandeur en lien avec les environnements interne et/ou externe desdits conteneurs.

**Patentansprüche**

**1.** Verfahren zum Anhaften (P100) an einen Cluster mit mehreren kommunizierenden elektronischen Vorrichtungen (10, 10i, a1, ..., a8, b1, ..., b8, j1, ..., j5), wobei das Verfahren durch eine Verarbeitungseinheit (11) jeder der kommunizierenden elektronischen Vorrichtungen oder einer elektronischen Fremdkommunikationsvorrichtung (10) zu dem Cluster (C1, C2) implementiert wird, wobei die besagte elektronische Vorrichtung zusätzlich zu der Verarbeitungseinheit (11) einen Datenspeicher (12), erste Kommunikationsmittel (13), die eine drahtlose Nahbereichskommunikation mit jeder anderen elektronischen Vorrichtung (10i) innerhalb des Kommunikationsbereichs ermöglichen, umfasst, wobei der Speicher (12) und die Kommunikationsmittel (13) mit der Verarbeitungseinheit (11) gekoppelt sind, wobei der Datenspeicher (12) den Wert einer Kennung (ID), die der kommunizierenden elektronischen Vorrichtung (10) zugeordnet ist, sowie Aufzeichnung (RH) beinhaltet, um den aktuellen Wert einer Kennung einer kommunizierenden elektronischen Vorrichtung (d2, h3), die als Clusterkopf fungiert, aufzunehmen, wobei das Verfahren (P100) Folgendes umfasst:

- einen Verfahrensschritt (101) zum Empfangen einer Anmeldenachricht (MH), die von einer von einer dritten kommunizierenden elektronischen Vorrichtung (d2, h3) entwickelt und übertragen wird, wobei die Anmeldenachricht (MH) die Kennung der Vorrichtung (d2, h3), die die Anmeldenachricht (MH) sendet, und einen Datensatz (CH) beinhaltet, der über die Fähigkeit der Sendevorrichtung zum Bereitstellen eines bestimmten Dienstes (S) Aufschluss gibt;
- einen Verfahrensschritt (102) zum Entschlüsseln der Anmeldenachricht (MH) und zum Herleiten der Kennung (IDH) der Sendevorrichtung aus der Anmeldenachricht (d2, h3) und dem Datensatz, der über die besagte Fähigkeit Aufschluss gibt;
- einen Verfahrensschritt (103) zum Aktualisieren der Aufzeichnung (RH), damit die Aufzeichnung den Wert (IDHc) der Kennung (IDHc) der Vorrichtung, die die entschlüsselte Anmeldenachricht (MH) sendet, und den Wert (CHc) des Datensatzes (CH) speichert, der die Fähigkeit der Sendevorrichtung zum Bereitstellen des Dienstes (S) widerspiegelt, wobei der Verfahrensschritt zum Aktualisieren (103) der Aufzeichnung (RH) nur dann abgeschlossen ist, wenn (104) der Datensatz (CH), der Aufschluss über die Eignung gibt, größer oder gleich einem bestimmten Mindestanforderungen-Schwellenwert ist, wobei die Vorrichtung, die das Verfahren implementiert, ein Clusterelement wird, dessen Vorrichtung (d2, h3), die als Clusterkopf fungiert, eine Kennung beinhaltet, deren Wert gleich dem aktuellen Kennwert (IDHc) ist, der in der Aufzeichnung (RH) gespeichert ist;
- einen Verfahrensschritt zum Übertragen (123) einer Dienstnachricht (MS) an die Vorrichtung (d2, h3), die als Clusterkopf für den betreffenden Dienst (S) fungiert;

wobei das Verfahren (P100) ferner Folgendes umfasst:

- einen Verfahrensschritt zum Bewerten (111) der Fähigkeit der Vorrichtung (10), das Verfahren (P100) zu implementieren, einen bestimmten Dienst (S) anzunehmen, wobei der genannte Verfahrensschritt (111) darin besteht, einen oder mehrere Betriebsparameter der Vorrichtung (10) abzuschätzen (1111) und den Datensatz (CH) zu erzeugen (1112), der über die Fähigkeit der Vorrichtung (10) zum Ausführen des bestimmten Dienstes (S) Aufschluss gibt;
- einen Verfahrensschritt zum Vergleichen (112) des Datensatzes, der die Fähigkeit in einen minimalen Schwellenwert für Funktionsanforderungen umwandelt;
- einen Verfahrensschritt zum Verschlüsseln und Übertragen (113) einer Anmeldenachricht (MH), die sowohl die Kennung (IDH) der Vorrichtung als auch den Datensatz (CH) enthält, der Aufschluss über die Fähigkeit der Vorrichtung gibt, den bestimmten Dienst (S) für jede kommunizierende Vorrichtung (10i) innerhalb des Kommunikationsbereichs bereitstellen zu können, wobei der Verfahrensschritt (113) nur dann implementiert wird, wenn (112-y) der Datensatz, der Aufschluss über die Fähigkeit gibt, größer oder gleich dem Schwellenwert für die minimale Funktionsanforderung ist.

2. Verfahren (P100) nach Anspruch 1, das einen Verfahrensschritt (105) im Anschluss an den Verfahrensschritt zum Entschlüsseln (102) einer Anmeldenachricht (MH) sowie vor dem Verfahrensschritt zum Aktualisieren (103) der Aufzeichnung (RH) umfasst, die den aktuellen Wert der Kennung (IDHc) der als Clusterkopf fungierenden Vorrichtung beinhaltet, wobei der Verfahrensschritt (105) Folgendes umfasst:

- Auslesen (1051) des aktuellen Wertes (IDHc) der Kennung der Vorrichtung, die als Clusterkopf fungiert, und zwar innerhalb der Aufzeichnung (RH);
- Vergleichen (1052) des aktuellen Wertes (IDHc) mit dem (IDH) der Kennung der Vorrichtung, welche die entschlüsselte Anmeldenachricht (MH) sendet;

und für welche, wenn (1052-n) die Kennwerte (IDHC, IDH) verschieden sind, der Verfahrensschritt zum Aktualisieren (103) der Aufzeichnung (RH) nur dann durchgeführt wird, wenn (1053-y) der Datensatz (CH), der Aufschluss über die Fähigkeit der die Anmeldeinformation (MH) sendenden Vorrichtung gibt, den gleichen Dienst (S) bereitzustellen, größer oder gleich (1053) dem Wert des Datensatzes (CHc) ist, welcher Aufschluss über die aktuelle Fähigkeit der Vorrichtung (d2, h3) gibt, die als Clusterkopf fungiert, zuzüglich einer bestimmten Konstante.

3. Verfahren (P100) nach einem der vorhergehenden Ansprüche, umfassend einen Verfahrensschritt im Anschluss an Verfahrensschritt (103) zum Aktualisieren der Aufzeichnung (RH) zum Verschlüsseln und Übertragen (106) einer über das Kommunikationsmittel (13) übertragenen Anmeldenachricht (MH') mit der in die Aufzeichnung eingetragenen Vorrichtungskennung, einschließlich des aktuellen Wertes (IDHc) der als Clusterkopf fungierenden Vorrichtungskennung, sowie dem Datensatz (CHc), der Aufschluss über die Fähigkeit der Vorrichtung gibt, den Dienst bereitstellen zu können, sowie der Kennung (ID) der Vorrichtung (10), die das Haftverfahren (P100) implementiert und als Clusterelement wirkt, welches die Anmeldenachricht (MH) von der als Clusterkopf fungierenden Vorrichtung weiterleitet.

4. Verfahren (P100) nach dem vorhergehenden Anspruch, wobei der Verfahrensschritt zum Entschlüsseln (102) einer weitergeleiteten Anmeldenachricht (MH') darin besteht, aus der Nachricht den Wert der Kennung (IDH) einer als Clusterelement fungierenden Vorrichtung sowie den Wert der Kennung einer Vorrichtung herzuleiten, welche die Anmeldenachricht übermittelt hat, und für die der Schritt zum Aktualisieren (103) der Aufzeichnung (RH) ferner darin besteht, in diese Aufzeichnung die Clusterelement-Vorrichtungskennung, den Verteiler der Anmeldenachricht, das Paar der Vorrichtungskennungen, das Clusterelement und den Clusterkopf einzugeben, die somit Routeninformationen ergeben.

5. Verfahren nach einem der vorstehenden Ansprüche, das Folgendes umfasst:

- einen Verfahrensschritt (131) zum Empfangen einer Cluster-Vernichtungsnachricht (MR), die von einer kommunizierenden elektronischen Drittvorrichtung mit der vorherigen Berechtigung, als Clusterkopf zu fungieren, ausgearbeitet und gesendet wurde, wobei die Cluster-Vernichtungsnachricht (MR) die Kennung (IDR) der die Cluster-Vernichtungsnachricht sendenden Vorrichtung enthält;
- einen Verfahrensschritt zum Entschlüsseln (132) der Cluster-Vernichtungsnachricht (MR) und hieraus Herleiten der Kennung (IDR) der die Cluster-Vernichtungsnachricht sendenden Vorrichtung;
- einen Verfahrensschritt zum Aktualisieren (133) der Aufzeichnung (RH), die den aktuellen Wert (IDHc) einer Kennung einer Vorrichtung, die als Clusterkopf fungiert, beinhaltet, um den aktuellen Wert zu löschen oder ihn durch einen vorbestimmten Wert zu ersetzen, der Fehlen einer Kennung der Vorrichtung, die als Clusterkopf fungiert, signalisiert, wobei die Vorrichtung, die das Verfahren implementiert, freigeben wird, und wobei die Aktualisierung (133) der Aufzeichnung (RH) nur dann durchgeführt wird, wenn (134-y) der Wert der Kennung, die aus der Cluster-Vernichtungsnachricht hergeleitet wird, identisch mit dem aktuellen Wert ist, der in die Aufzeichnung eingetragen ist.

6. Verfahren (P100) nach einem der vorhergehenden Ansprüche, wobei der Verfahrensschritt zum Bewerten der Fähigkeit (111) der Vorrichtung (10), die das Verfahren zum Ausführen eines bestimmten Dienstes (S) implementiert, wiederholbar ist, wobei das Verfahren einen Verfahrensschritt nach dem Senden (113) einer Anmeldenachricht (MH), zum Verschlüsseln und Übertragen (115) einer Cluster-Vernichtungsnachricht (MR) umfasst, wobei die Nachricht (MR) die Kennung der Vorrichtung umfasst, für jede kommunizierende Vorrichtung (10i) geltend, die sich in einem Kommunikationsbereich befindet, sobald durch Eintreten des Verfahrensschritts (111) zum Beurteilen der Fähigkeit der Vorrichtung, den bestimmten Dienst (S) auszuführen, bestätigt wird, dass einer der Betriebsparameter der Vorrichtung (114) unterhalb eines erforderlichen Funktionsminimums liegt, was eine Nichteignung zur Ausführung des Dienstes bedeutet.

7. Verfahren nach einem der vorhergehenden Ansprüche, wobei die Vorrichtung eine elektrische Energiequelle (17) umfasst, die die Verarbeitungseinheit, den Datenspeicher und die Kommunikationsmittel versorgt, und wobei einer der Betriebsparameter die Höhe der elektrischen Energie beschreibt, die aus der elektrischen Energiequelle (17) verfügbar ist.

8. Verfahren nach einem der vorhergehenden Ansprüche, wobei die Vorrichtung ein zweites Fernkommunikationsmittel (16) umfasst, das mit der Verarbeitungseinheit gekoppelt ist, wobei der Dienst für die Datenübertragung an eine entfernte Einheit (RS) über das Fernkommunikationsmittel (16) erfolgt, und wobei einer der Betriebsparameter die Sendeleistung eines Signals durch das Fernkommunikationsmittel (16) beschreibt.

9. Computerprogramm (P) mit mehreren Programmanweisungen, die, sobald sie:

- zuvor in einem Programmspeicher (14) einer elektronischen Vorrichtung (10) aufgezeichnet wurden, die ferner eine Verarbeitungseinheit (11) umfasst, sowie erste Kommunikationsmittel (13), die eine drahtlose Nahbereichskommunikation mit jeder anderen elektronischen Vorrichtung (10i) innerhalb des Kommunikationsbereichs ermöglichen, sowie einen Datenspeicher (12), der den Wert einer Kennung (ID), die der Vorrichtung zugeordnet ist, aufzeichnet, sowie eine Aufzeichnung (RH) zum Einbeziehen des aktuellen Wertes einer Kennung einer Vorrichtung, die als Clusterkopf wirkt, wobei die Speicher (12, 14) und die Kommunikationsmittel (13) mit der Verarbeitungseinheit (11) gekoppelt sind;
- durch die Verarbeitungseinheit (11) ausgeführt oder ausgewertet werden, bewirken, dass ein Verfahren nach einem der Ansprüche 1 bis 6 ausgeführt wird.

10. Computerprogramm nach dem vorhergehenden Anspruch, für das die Vorrichtung (10), die das Verfahren durchführt, eine elektrische Energiequelle (17) umfasst, die die Verarbeitungseinheit (11), den Datenspeicher (12), den Programmspeicher (14), das erste Kommunikationsmittel (13) versorgt, und für das die Anweisungen, wenn sie von der Verarbeitungseinheit der Vorrichtung ausgeführt oder ausgewertet werden, die Durchführung eines Verfahrens nach Anspruch 7 bewirken.

11. Computerprogramm nach Anspruch 9 oder 10, für das die das Verfahren implementierende Vorrichtung ein zweites Fernkommunikationsmittel (16) umfasst, das mit der Verarbeitungseinheit (11) gekoppelt ist, und für das die Anweisungen, wenn sie von der Verarbeitungseinheit der Vorrichtung ausgeführt oder ausgewertet werden, die Implementierung eines Verfahrens nach Anspruch 8 bewirken.

12. Elektronische Vorrichtung (10), umfassend eine Verarbeitungseinheit (11), einen Datenspeicher (12), einen Programmspeicher (14), erste Kommunikationsmittel (13), die eine drahtlose Nahbereichskommunikation mit jeder anderen elektronischen Vorrichtung (10i) innerhalb des Kommunikationsbereichs ermöglichen, wobei die Speicher (12, 14) und Kommunikationsmittel (13) mit der Verarbeitungseinheit (11) gekoppelt sind, wobei der Datenspeicher (12) den Wert einer Kennung (ID), die der Vorrichtung zugeordnet ist, sowie eine Aufzeichnung (RH) zum Einbeziehen des aktuellen Wertes einer Kennung einer Vorrichtung, die als Clusterkopf fungiert, beinhaltet, wobei die Vorrichtung (10) **dadurch gekennzeichnet ist, dass** sie in den Programmspeicher (14) die Anweisungen eines Programms (P) nach Anspruch 9 beinhaltet.

13. Elektronische Vorrichtung (10) nach dem vorhergehenden Anspruch, die eine elektrische Energiequelle (17) umfasst, die die Verarbeitungseinheit (11) versorgt, **dadurch gekennzeichnet, dass** sie im Programmspeicher (14) die Anweisungen eines Programms (P) nach Anspruch 10 enthält.

14. Elektronische Vorrichtung (10) nach den Ansprüchen 12 oder 13, welche zweite Fernkommunikationsmittel (16) umfasst, die mit der Verarbeitungseinheit (11) gekoppelt sind, wobei die Vorrichtung (10) **dadurch gekennzeichnet ist, dass** sie im Programmspeicher (14) die Anweisungen eines Programms (P) nach Anspruch 11 enthält.

15. System, umfassend eine Vielzahl von kommunizierenden elektronischen Vorrichtungen (10, 10i), die einem der Ansprüche 12 bis 14 entsprechen.

16. System nach dem vorhergehenden Anspruch, umfassend eine Vielzahl von Behältern für Güter und feste, fluide oder flüssige Waren, wobei die Behälter jeweils mit kommunizierenden elektronischen Vorrichtungen (10, 10i) zusammenwirken, wobei letztere jeweils einen Sensor (15) umfassen, der mit der Verarbeitungseinheit (11) zusammenwirkt, um eine Menge zu messen und zu erfassen, die mit der inneren und/oder äußeren Umgebung der Behälter zusammenhängt.

**Claims**

1. Method (P100) for joining a cluster comprising a plurality of communicating electronic devices (10, 10i, a1,...,a8, b1,...,b8,..., j1,...,j5), said method being implemented by a processing unit (11) of each of said communicating electronic devices or of a communicating electronic device (10) foreign to said cluster (C1, C2), the said electronic device comprising, in addition to the said processing unit (11), a data memory (12), first communication means (13) performing a wireless proximity communication with any other electronic device (10i) located within communication range, said memory (12) and said communication means (13) cooperating with said processing unit (11), the data memory (12) containing the value of an identifier (ID) dedicated to the communicating electronic device (10) and a record (RH) to contain the current value of an identifier of a communicating electronic device (d2, h3) acting as a cluster head, said method comprising:

- a step (101) for receiving an enrollment message (MH) generated and transmitted by a third-party communicating electronic device (d2, h3), said enrollment message (MH) comprising the identifier of the device (d2, h3) that transmitted said enrollment message (MH) and a datum (CH) expressing the capacity of said transmitting device to perform a given service (S);
- a step (102) for decoding said enrollment message (MH) and deducing therefrom said identifier (IDH) of said device that transmitted the enrollment message (d2, h3) and the datum (CH) expressing said capacity;
- a step (103) for updating the record (RH) so that said record memorizes the value (IDHc) of the identifier (IDH) of the device transmitting the decoded enrollment message (MH) and the value (CHc) of the datum (CH) expressing the capacity of the transmitting device to perform said service (S), the step for updating (103) the record (RH) cannot be performed unless (104) the datum (CH) expressing said capacity is greater than or equal to a specific minimum requirement threshold, said device implementing said method becoming a cluster member of which the device (d2, h3) acting as a cluster head contains an identifier whose value is equal to the current identifier value (IDHc) memorized in said record (RH);
- a step for transmitting (123) a service message (MS) to the device (d2, h3) acting as a cluster head for the service (S) considered;

said method (P100) also comprising:

- a step for evaluating (111) the capacity of the device (10) implementing said method (P100), to provide a given service (S), said step (111) consisting of estimating (1111) one or more operating parameters of said device (10) and producing (1112) the datum (CH) expressing the capacity of said device (10) to be able to perform the given service (S);
- a step for comparing (112) the datum expressing said capacity to a minimal functional requirement threshold;
- a step for encoding and transmitting (113) an enrollment message (MH) comprising the identifier (IDH) of said device as well as the datum (CH) expressing the capacity of said device to be able to perform said given service (S) to any communicating device (10i) situated within communication range, said step (113) only being implemented if (112-y) the datum expressing said capacity is greater than or equal to said minimal functional requirement threshold.

**2.** Method (P100) according to claim 1, including a step (105) after the step for decoding (102) an enrollment message (MH) and before the step for updating (103) the record (RH) containing the current value of the identifier (IDHc) of the device acting as cluster head, said step (105) involving:

- reading (1051) in said record (RH) the current value (IDHc) of the identifier of the device acting as cluster head;
- comparing (1052) said current value (IDHc) with that (IDH) of the identifier of the device that transmitted the decoded enrollment message (MH).

and for which, if (1052-n) said identifier values (IDHc, IDH) are different, the step for updating (103) the record (RH) cannot be performed unless (1053-y) the datum (CH) expressing the capacity of the device transmitting the enrollment message (MH) to perform the same service (S) is greater than or equal (1053) to the value of the datum (CHc) expressing the current capacity of the device (d2, h3) acting as cluster head plus a specific constant.

**3.** Method (P100) according to any one of the preceding claims, comprising a step after step (103) in order to update the record (RH), encode and transmit (106) via the communication means (13) a relayed enrollment message (MH') comprising the identifier of the device written in the record containing the current value (IDHc) of the identifier of the device acting as cluster head, the datum (CHc) expressing the capacity of said device to perform the service, as well as the identifier (ID) of the device (10) implementing said join method (P100) and acting as cluster member relaying the enrollment message (MH) emanating from the device acting as cluster head.

**4.** Method (P100) according to the preceding claim, for which the step to decode (102) a relayed enrollment message (MH') involves deducing from said message the value of the identifier (IDH) of a device acting as a cluster member and the value of the identifier of a device having relayed said enrollment message, and for which the step for updating (103) the record (RH) also consists in storing in said record the said identifier of the cluster member device, which relayed the enrollment message, the paired identifiers of the cluster member devices and cluster head thus constituting route information.

**5.** Method according to any of the preceding claims, comprising:

- a step (131) to receive a cluster destruction message (MR) generated and transmitted by a third-party communicating electronic device having previously had the capacity to act as cluster head, said cluster destruction message (MR) containing the identifier (IDR) of the device having transmitted the said cluster destruction message;
- a step (132) to decode said cluster destruction message (MR) and deduce therefrom said identifier (IDR) of said device that transmitted the cluster destruction message;
- a step for updating (133) the record (RH) containing the current value (IDHc) of an identifier of a device acting as cluster head in order to delete said current value or replace it with a predetermined value expressing an absence of identifier of a device acting as cluster head, said device implementing said method becoming loose, said update (133) of the record (RH) being performed only if (134-y) the value of the identifier deduced from the cluster destruction message is identical to the current value stored in said record.

**6.** Method (P100) according to the preceding claim, for which the step to assess the capacity (111) of the device (10) implementing said method to perform a specific service (S) is iterative, said method comprising a step after transmitting (113) an enrollment message (MH), for decoding and transmitting (115) a cluster destruction message (MR), said message (MR) containing the identifier of said device, to any communicating device (10i) located within communication range, as soon as an occurrence of the step (111) for assessing the capacity of the device to perform the specific service (S) indicates that one parameter among the operating parameters of said device is (114) below a required operational minimum, indicating insufficient capacity to perform the service.

**7.** Method according to any one of the preceding claims, for which the device comprises an electrical energy source (17) powering the processing unit, the data memory and the communication means and for which one of the said operating parameters describes the level of electrical energy available from the electrical energy source (17).

**8.** Method according to any one of the preceding claims, for which the device comprises second means (16) of long-distance communication cooperating with the processing unit, the service involving transmitting data to a remote entity (RS) via said long-distance communication means (16), and for which one of said operating parameters describes the transmission power of a signal by the long-distance communication means (16).

**9.** Computer program (P) comprising a plurality of program instructions that, if they are:

- previously loaded in a program memory (14) of an electronic device (10) also comprising a processing unit (11), first communication means (13) performing a wireless proximity communication with any other electronic device (10i) located within communication range, a data memory (12) recording the value of an identifier (ID) dedicated to the device and a record (RH) for containing the current value of an identifier of a device acting as a cluster head, said memories (12, 14) and communication means (13) cooperating with said processing unit (11);
- executed or interpreted by said processing unit (11),
causes the implementation of a method according to any of claims 1 to 6.

**10.** Computer program according to the preceding claim, for which the device (10) implementing said method comprises an electrical energy source (17) powering the processing unit (11), the data memory (12), the program memory (14) and the first communication means (13), and for which the instructions, when they are executed or interpreted by the processing unit of the device, cause the implementation of a method according to claim 7.

**11.** Computer program according to claims 9 or 10, for which the device implementing said method comprises second long-distance communication means (16) cooperating with the processing unit (11), and for which the instructions, when they are executed or interpreted by the processing unit of the device, cause the implementation of a method according to claim 8.

**12.** Electronic device (10) comprising a processing unit (11), a data memory (12), a program memory (14), first communication means (13) performing a wireless proximity communication with any other electronic device (10i) located within communication range, said memories (12, 14) and communication means (13) cooperating with said processing unit (11), the data memory (12) containing the value of an identifier (ID) dedicated to the device and a record (RH) to contain the current value of an identifier of a device acting as a cluster head, said device (10) being **characterized in that** it contains in the program memory (14) the instructions of a program (P) according to claim 9.

**13.** Electronic device (10) according to the preceding claim comprising an electrical energy source (17) powering the processing unit (11), said device being **characterized in that** it contains in the program memory (14) the instructions of a program (P) according to claim 10.

**14.** Electronic device (10) according to claims 12 or 13 comprising second long-distance communication means (16) cooperating with the processing unit (11), said device (10) being **characterized in that** it contains in the program memory (14) the instructions of a program (P) according to claim 11.

**15.** System comprising a plurality of communicating electronic devices (10, 10i) according to any one of claims 12 to 14.

**16.** System according to the preceding claim comprising a plurality of containers of goods and solid, fluid or liquid merchandise, said containers cooperating respectively with the communicating electronic devices (10, 10i), the latter each comprising a sensor (15) cooperating with the processing unit (11) to measure and collect a parameter relating to the internal and/or external environments of said containers.

**FIG.1**

**FIG.2**

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. HAIDAR ; H. ARTAIL ; D. TABET.** A cluster-based trust aware routing protocol for mobile ad-hoc networks. *WIRELESS NETWORK,* 2010, 969-984
- **T. DUCROCQ ; N. MITTON ; M. HAUSPIE.** Energy-based clustering for wireless sensor network lifetime optimization. *IEEE WIRELESS COMMUNICATIONS and Networking Conference,* Avril 2013, 968-973
- **W. HEINZELMAN ; A. CHANDRAKASAN ; H. BALAKRISHNAN.** An Application-Specific Protocol Architecture for Wireless Microsensor Networks. *IEEE TRANSACTIONS ON WIRELESS COMMUNICATIONS,* Octobre 2002, vol. 1 (4